# EUROPEAN PATENT APPLICATION

(11) **EP 4 531 427 A1**
(43) Date of publication of application: **02.04.2025**
(21) Application number: 23826374.3
(22) Date of filing: 20.06.2023
(51) Int. Cl.: H04R 1/10

(54) **EARPHONE AND EARPHONE ASSEMBLY**

(30) Priority: 21.06.2022 CN 202210705712; 19.08.2022 CN 202211001685
(71) Applicant: Huawei Technologies Co., Ltd., Shenzhen, Guangdong 518129 (CN)
(72) Inventor: DONG, Li, Shenzhen, Guangdong 518129 (CN)
(74) Representative: Thun, Clemens
(86) International application number: PCT/CN2023/101202
(87) International publication number: WO 2023/246726

(57) **Abstract**

This application discloses an earphone and an earphone assembly. The earphone includes a housing, a first circuit board, and an antenna. Both the first circuit board and the antenna are located in the housing and are disposed in a stacked manner. The first circuit board and the antenna are structural members independent of each other. The first circuit board is located between the antenna and the housing There is a touch sensor on a side that is of the first circuit board and that faces the housing, and the touch sensor is configured to detect a touch action performed on the housing. The antenna is configured to transmit/receive a radio frequency signal. The antenna of the earphone can provide a reference ground for the touch sensor. The touch sensor and the antenna coexist in a same space region, and occupied space is minimized, to facilitate miniaturization of the earphone.

## Description

This application claims priority to Chinese Patent Application No. 202210705712.8, filed with the China National Intellectual Property Administration on June 21, 2022 and entitled "EARPHONE AND EARPHONE ASSEMBLY", which is incorporated herein by reference in its entirety. This application claims priority to Chinese Patent Application No. 202211001685.2, filed with the China National Intellectual Property Administration on August 19, 2022 and entitled "EARPHONE AND EARPHONE ASSEMBLY", which is incorporated herein by reference in its entirety.

### TECHNICAL FIELD

This application relates to the field of audio technologies, and in particular, to an earphone and an earphone assembly.

### BACKGROUND

Wireless earphones in the current market usually include touch assemblies and antennas, which are configured to respectively implement man-machine interaction and a wireless communication function. For performance of the antenna and convenience of user control, both a radiation region of the antenna and a touch control region of the touch assembly need to be placed in a region that is of the wireless earphone and that is exposed out of a human body, for example, on an outer side of a stem of the earphone or an outer surface of a bean-shaped earphone. Due to space requirements of the radiation region and the touch control region, an appearance design of the wireless earphone is limited, and it is difficult to implement a miniaturization design of the wireless earphone.

### SUMMARY

This application provides an earphone and an earphone assembly including the earphone. A touch sensor and an antenna of the earphone coexist in a same space region, and occupied space is minimized, to facilitate miniaturization of the earphone.

According to a first aspect, an embodiment of this application provides an earphone. The earphone includes a housing, a first circuit board, and an antenna. Both the first circuit board and the antenna are located in the housing and are disposed in a stacked manner. The first circuit board and the antenna are structural members independent of each other. The first circuit board is located between the antenna and the housing. There is a touch sensor on a side that is of the first circuit board and that faces the housing, and the touch sensor is configured to detect a touch action performed on the housing. The antenna is configured to transmit/receive a radio frequency signal.

In this application, a side that is of the touch sensor and that is used to detect a touch operation of a user is a touch side, and the other side of the touch sensor is a non-touch side. That is, a side that is of the touch sensor and that faces the housing is the touch side, and a side that is of the touch sensor and that faces away from the housing is the non-touch side. The antenna is located on the non-touch side of the touch sensor, and the antenna is of a conductor structure. Therefore, the antenna may be used as a reference ground of the touch sensor, to shield a cluttered signal from the non-touch side of the touch sensor, so as to reduce or eliminate signal interference caused by the cluttered signal to the touch sensor, and improve accuracy of touch detection of the touch sensor. In addition, the antenna radiates a high-frequency current, and the touch sensor senses a low-frequency current. Therefore, the antenna exerts no impact on touch detection of the touch sensor.

In this application, the antenna is configured to transmit/receive a radio frequency signal, and the antenna is further configured to provide a reference ground for the touch sensor. In this case, based on a relative position relationship between the housing, the touch sensor, and the antenna, the antenna is compatible with two functions by using a same structure, and is not only used to implement wireless communication of the earphone, but also used as a reference ground of the touch sensor, to shield a cluttered signal and improve accuracy of touch detection.

In addition, the touch sensor and the antenna of the earphone coexist in a same space region, and occupied space is minimized, to facilitate miniaturization of the earphone. Furthermore, a radiation region of the antenna and a touch control region of the touch sensor may be implemented by using a same region of the housing. When the housing has a fixed volume, both the radiation region of the antenna and the touch control region of the touch sensor may have a large area, so that the earphone can obtain better transmit/receive performance of the antenna, and more diversified touch operations can be detected.

In some possible implementations, a projection of the antenna on the first circuit board covers the touch sensor. In this case, the antenna can better provide a reference ground for the touch sensor, to improve detection accuracy of the touch sensor. It may be understood that a case in which the projection of the antenna on the first circuit board covers the touch sensor includes a case of complete coverage and a case of basic coverage. When the projection of the antenna covers more than 80% of the touch sensor, it is considered that there is the case of basic coverage. Specifically, coverage of the touch sensor by the antenna is mainly coverage of the touch sensor by a radiation part of the antenna. At a position at which the touch sensor may be interfered with by concentrated interference sources, the radiation part of the antenna covers the touch sensor as completely as possible.

In some possible implementations, the first circuit board includes a conductive layer, and the conductive layer includes the touch sensor. In this case, the first circuit board has a small thickness when the touch sensor is formed, to facilitate mounting.

In some possible implementations, the touch sensor includes at least three touch blocks, and the at least three touch blocks are arranged into a strip-shaped touch region and are disposed at an interval from each other. An extension direction of the strip-shaped touch region corresponds to an extension direction of the antenna. In this case, the touch sensor is of a slider sensing structure. When capacitance of the at least three touch blocks sequentially changes, it may be determined that the user performs a sliding action. The touch sensor may further detect actions, for example, tap, double tap, touch and hold, and the like, of the user.

In some possible implementations, a spacing between two adjacent touch blocks ranges from 0.5 mm to 2 mm. In this case, the at least three touch blocks are disposed, to avoid incorrectly determining that a sliding action is generated when the user simultaneously touches two touch blocks. On the contrary, when the spacing between two adjacent touch blocks is excessively small, an accidental touch is likely to occur. If the spacing between two adjacent touch blocks is excessively large, the user possibly cannot touch the touch block, resulting in low touch efficiency.

In some possible implementations, the earphone further includes a main circuit board, a processor, and a radio frequency circuit, the main circuit board is located on a side that is of the antenna and that faces away from the first circuit board, both the processor and the radio frequency circuit are fastened and electrically connected to the main circuit board, the radio frequency circuit is electrically connected to the antenna and the processor, and the processor is electrically connected to a plurality of touch blocks.

In this implementation, the main circuit board, the antenna, and the first circuit board are disposed in a stacked manner, so that internal space of the earphone can be fully used, and space utilization of the earphone can be improved, to facilitate miniaturization of the earphone.

In some possible implementations, the earphone further includes a high-frequency blocking circuit, and the high-frequency blocking circuit is connected in series between the plurality of touch blocks and the processor. For example, the high-frequency blocking circuit may be fastened and electrically connected to a second circuit board. An inductive choke (choke) circuit is usually used for the high-frequency blocking circuit. Each touch block passes through the high-frequency blocking circuit and then is connected to the main circuit board. A low-frequency signal formed by the touch sensor in a touch detection process may be transmitted to the processor through the high-frequency blocking circuit. The antenna of the earphone usually works on a high-frequency Bluetooth frequency band. Therefore, the high-frequency blocking circuit can block a signal of the antenna from forming a path on the plurality of touch blocks, to eliminate coupling impact of the plurality of touch blocks on the antenna, so as to ensure that transmit/receive performance of the antenna is not affected or is slightly affected.

In some possible implementations, the earphone further includes the second circuit board, one end of the second circuit board is connected to the first circuit board, the other end of the second circuit board is connected to the main circuit board, and the high-frequency blocking circuit is fastened and electrically connected to the second circuit board. The second circuit board and the first circuit board may be integrally formed structural members, for example, are respectively two parts of a flexible circuit board.

In some possible implementations, the antenna includes an antenna support and a first metal piece, the antenna support is located between the first circuit board and the main circuit board, the first metal piece is fastened to the antenna support, and the first metal piece is electrically connected to the main circuit board. In this implementation, composition of the antenna is simple and easy to implement.

In some possible implementations, the antenna includes an antenna support, a first metal piece, and a second metal piece, the antenna support is located between the first circuit board and the main circuit board, the first metal piece is fastened to the antenna support, the first metal piece is electrically connected to the main circuit board, and the second metal piece is fastened and electrically connected to the first metal piece.

In this implementation, the first metal piece and the second metal piece may jointly form the radiation part of the antenna, and the radiation part of the antenna has a large dimension. This increases a radiation area of the antenna, and improves transmit/receive performance of the antenna, so that the earphone has good wireless communication performance.

All of the antenna support, the first metal piece, and the second metal piece may be approximately strip-shaped, and the entire antenna is approximately strip-shaped, to better match a shape of the housing of the earphone in a case of a large radiation area, so as to reduce mounting difficulty.

In some possible implementations, the first metal piece is formed on the antenna support by using a laser direct structuring process. In this case, a dimension and a shape of the first metal piece are less constrained, and a pattern of the first metal piece is easy to adjust.

In some possible implementations, the antenna support includes a plate body and a plurality of support feet fastened to the plate body, the plate body and the main circuit board are disposed at an interval, and the plurality of support feet are fastened to the main circuit board. Space is formed between the plate body of the antenna support and the main circuit board, and a component may be arranged on the main circuit board by using the space. The first metal piece includes a main body part and a connection part, the main body part is fastened on a side that is of the plate body and that faces away from the main circuit board, the connection part is connected to the main body part, and extends to at least one of the plurality of support feet, and the connection part is soldered to the main circuit board. In this case, the connection part of the first metal piece is fastened and electrically connected to the main circuit board through tin soldering, so that the main circuit board can feed the antenna.

In this implementation, the first metal piece forms the radiation part of the antenna or a part of the radiation part, the first metal piece and the main circuit board share the support foot of the antenna support, and the support foot of the antenna support is not only used to implement a structural connection function, but also used as a feed point of the antenna. Therefore, a conventional spring plate structure used as a feed point is omitted, and a large amount of plate arrangement space is saved, to facilitate arrangement of the antenna in small space. In addition, a signal is transmitted between the antenna and the main circuit board without passing through an electrical connector. Therefore, signal noise of the antenna is reduced, and wireless communication quality of the earphone is improved.

The antenna support may be an integrally formed structural member. In this case, the antenna support has high structural strength and low costs.

In some possible implementations, there are a plurality of connection parts, and the plurality of connection parts are connected to different positions of the main body part and are fastened to different support feet. In this implementation, the earphone can implement a multi-point feeding solution of the antenna, so that a MIMO solution of the antenna can be implemented in some embodiments.

In some possible implementations, the antenna includes an extended circuit board, and the extended circuit board includes the second metal piece. The second metal piece may be formed by a conductive layer of the extended circuit board. The extended circuit board may be a flexible circuit board. In this implementation, the second metal piece is formed by the extended circuit board, and the extended circuit board is small in thickness, can be bent and deformed, has a low requirement for mounting space, and can be easily arranged in narrow space, for example, internal space of a stem, to achieve an objective of extending the radiation area of the antenna in the narrow space.

In some other possible implementations, the second metal piece may alternatively be made of a metal sheet material, for example, a metal plate such as a steel sheet or a structural member such as a metal support. Similarly, the antenna may also achieve, by using the small thickness and easy bending performance of the second metal piece, an objective of extending the radiation area of the antenna in narrow space.

In some possible implementations, the first circuit board includes a conductive layer, an insulation layer, and a second conductive layer that are disposed in a stacked manner. The conductive layer is located on a side that is of the insulation layer and that faces the housing, the conductive layer includes the touch sensor, and the second conductive layer is located on a side that is of the insulation layer and that faces away from the housing. A projection of the antenna on the first circuit board covers one part of the touch sensor, and the second conductive layer covers the other part of the touch sensor.

In this implementation, both the antenna and the second conductive layer provide a reference ground for the touch sensor, to ensure coverage effect of the touch sensor and improve detection accuracy of the touch sensor. The second conductive layer and the antenna are approximately arranged in a staggered manner. There is one second conductive layer, and an area of the second conductive layer is significantly less than an area of the insulation layer. An overall thickness of the first circuit board is still very small, and mounting difficulty is low.

In some possible implementations, the housing includes a main housing and a front housing, the front housing is fastened on a front side of the main housing, internal space of the front housing communicates with internal space of the main housing, and when the earphone is being worn, the front housing faces a user ear. The main housing includes a first end connected to the front housing and a second end that is far away from the front housing, and in a direction from the first end to the second end of the main housing, an outer contour of the main housing first shrinks and then expands. The first circuit board is fastened to an inner wall of the main housing, and when the earphone is being worn, the first circuit board faces away from the user ear.

In this implementation, the touch sensor is a capacitive sensor (cap sensor). The first circuit board is disposed close to the inner wall of the main housing of the housing, and is at a position close to a back side of the main housing, and therefore when the earphone is being worn, faces away from the user ear and is exposed relative to the user ear. When the user approaches or touches a back of the main housing, the touch sensor may detect a touch action of the user, to implement man-machine interaction.

In some possible implementations, the internal space of the main housing includes top space, neck space, and bottom space, a cross-sectional area of the top space of the main housing is greater than a cross-sectional area of the neck space of the main housing, and a cross-sectional area of the bottom space of the main housing is greater than the cross-sectional area of the neck space of the main housing. The first circuit board extends from the top space of the main housing to the bottom space of the main housing. In this case, the first circuit board has a large area, so that the touch sensor has a large arrangement area, and more diversified touch actions can be detected.

In some possible implementations, the earphone further includes a third circuit board, the third circuit board is located in the top space of the main housing, one end of the third circuit board is connected to the first circuit board or the second circuit board, the other end of the third circuit board is bent to the side that is of the antenna and that faces away from the first circuit board, and is fastened to the main housing, and there is a wearing detection sensor on a side that is of the third circuit board and that faces the main housing.

In this embodiment, the wearing detection sensor is a capacitive sensor (cap sensor). When the user wears the earphone, the incisura intertragica of the ear corresponds to a position of the wearing detection sensor, and the wearing detection sensor may detect whether skin of the user is in contact with the earphone, to cooperate in detecting whether the earphone is being worn. Detection accuracy of the wearing detection sensor is high.

The earphone cooperates, through detection by a proximity sensor and the wearing detection sensor, in determining whether the earphone is being worn. For example, when both the proximity sensor and the wearing detection sensor of the earphone detect that the earphone approaches or is in contact with the user, the earphone determines that the earphone is being worn, or if one of the proximity sensor and the wearing detection sensor detects that the user does not approach or is not in contact with the user, the earphone determines that the earphone is not being worn. Wearing detection of the earphone may be a prerequisite for the touch sensor to detect a touch operation of the user. The touch sensor senses the touch operation of the user only when the earphone determines that the earphone is being worn.

In some possible implementations, the first circuit board of a detection circuit board may be fixedly connected to the inner wall of the main housing by using a hot melt adhesive membrane, the third circuit board may be fixedly connected to the inner wall of the main housing by using double-sided adhesive tape, and another part of the detection circuit board may also be fixedly connected to the inner wall of the main housing by using the double-sided adhesive tape. A region that is of the main housing and that is used for the third circuit board is located at a position close to a first opening, an opening area of the first opening is large, and it is easy to implement adhesion, so that the third circuit board can be easily and tightly bonded to the main housing at a time by using the double-sided adhesive tape. The first circuit board has a long length, and needs to extend from the top space of the main housing to the bottom space of the main housing during assembly. In a fastening manner of using the hot melt adhesive membrane, the first circuit board may first extend into the main housing in an assembly process. In this process, there is no incorrect adhesion. After the first circuit board extends in place, the hot melt adhesive membrane is heated (for example, heated to 80 degrees or 90 degrees), so that the first circuit board is adhered to the main housing, and a gap between the first circuit board and the main housing can be better absorbed by using a semi-melted state of the hot melt adhesive membrane, to obtain a better bonding state between the first circuit board and the main housing. In an assembly process of the earphone, the detection circuit board may be first mounted in the main housing, then the main circuit board is mounted, and then the detection circuit board is snap-fitted with the main circuit board to implement an electrical connection.

In some possible implementations, the third circuit board and the first circuit board are integrally formed structural members, to reduce costs and assembly difficulty of the earphone.

According to a second aspect, an embodiment of this application further provides an earphone assembly. The earphone assembly includes a charging case and the earphone according to any one of the foregoing implementations. The charging case is configured to accommodate the earphone.

### BRIEF DESCRIPTION OF DRAWINGS

FIG. 1A is a rear view of an earphone in some embodiments according to this application;
FIG. 1B is a left view of the earphone shown in FIG. 1A;
FIG. 2 is a diagram of a structure of the earphone shown in FIG. 1A in some use scenarios;
FIG. 3 is a diagram of a partial exploded structure of the earphone shown in FIG. 1A;
FIG. 4 is a diagram of a cross-sectional structure that is of the earphone shown in FIG. 1A and that is taken along A-A;
FIG. 5 is a block diagram of some circuits of the earphone shown in FIG. 1A;
FIG. 6 is a diagram of an exploded structure of a housing shown in FIG. 3;
FIG. 7 is a diagram of an internal structure of a housing shown in FIG. 3;
FIG. 8 is a diagram of a partial structure of the earphone shown in FIG. 1A;
FIG. 9 is a diagram of structures of a first flexible circuit board and some components shown in FIG. 8;
FIG. 10 is a diagram of structures of a second flexible circuit board and some components shown in FIG. 8;
FIG. 11A is a diagram of a structure of an antenna of the earphone shown in FIG. 3;
FIG. 11B is a diagram of a structure of the antenna shown in FIG. 11A at another angle;
FIG. 12A is a diagram of an assembly structure of an antenna and a main circuit board shown in FIG. 3;
FIG. 12B is a diagram of a structure of the structure shown in FIG. 12A at another angle;
FIG. 13A is a diagram of an assembly structure of a main circuit board, an antenna, and a detection circuit board shown in FIG. 3;
FIG. 13B is a diagram of a structure of the structure shown in FIG. 13A at another angle;
FIG. 14 is a diagram of a partial structure of the earphone shown in FIG. 4;
FIG. 15 is a diagram of a partial structure of a first circuit board shown in FIG. 13A;
FIG. 16 is a diagram of structures of a first circuit board and the antenna shown in FIG. 13A in some other embodiments;
FIG. 17 is a diagram of structures of a detection circuit board and a related adhesive layer shown in FIG. 14; and
FIG. 18 is a diagram of a structure of an earphone assembly in some embodiments according to an embodiment of this application.

### DESCRIPTION OF EMBODIMENTS

The following describes technical solutions of embodiments of this application with reference to accompanying drawings. In the descriptions of embodiments of this application, unless otherwise stated, "/" represents "or". For example, A/B may represent A or B. In this specification, "and/or" merely describes an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

In the following, terms such as "first" and "second" are used only for description purposes, and cannot be understood as an indication or implication of relative importance or an implicit indication of a quantity of indicated technical features. Therefore, a feature limited by "first" or "second" may explicitly or implicitly include one or more features.

The orientation terms such as "front", "rear", "left", "right", "inner", "outer", "side", "top", "bottom", "upper", and "lower" in embodiments of this application are merely directions described with reference to the accompanying drawings. Therefore, the orientation terms are used to better and more clearly describe and understand embodiments of this application, instead of indicating or implying that a specified apparatus or element needs to have a specific orientation, or be constructed and operated in a specific orientation. Therefore, this cannot be understood as a limitation on embodiments of this application.

In the descriptions of embodiments of this application, it should be noted that unless otherwise explicitly specified and limited, the terms "mounted", "connected", "connection", and "disposed on..." should be understood in a broad sense. For example, a "connection" may be a detachable connection, a non-detachable connection, a direct connection, or an indirect connection implemented through an intermediate medium. A "fixed connection" means that two parts are connected to each other and a relative position relationship remains unchanged after the two parts are connected. An "electrical connection" means that an electrical signal may be conducted between each other.

### Overall appearance and parting of an earphone:

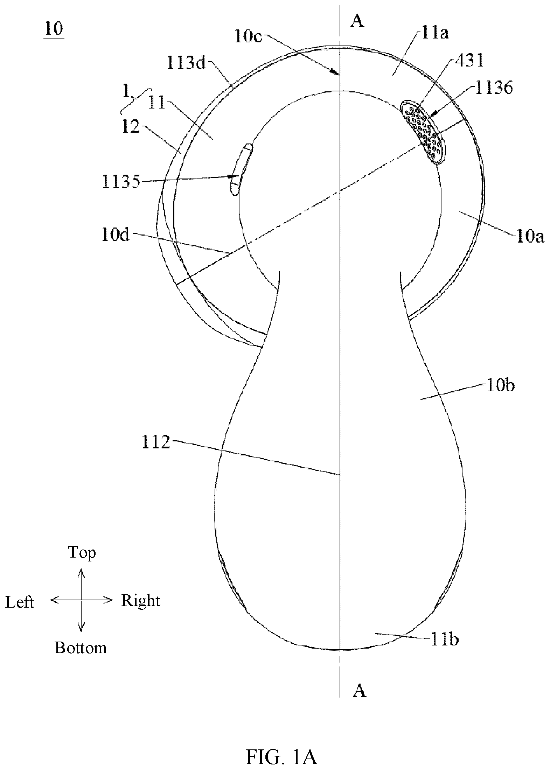

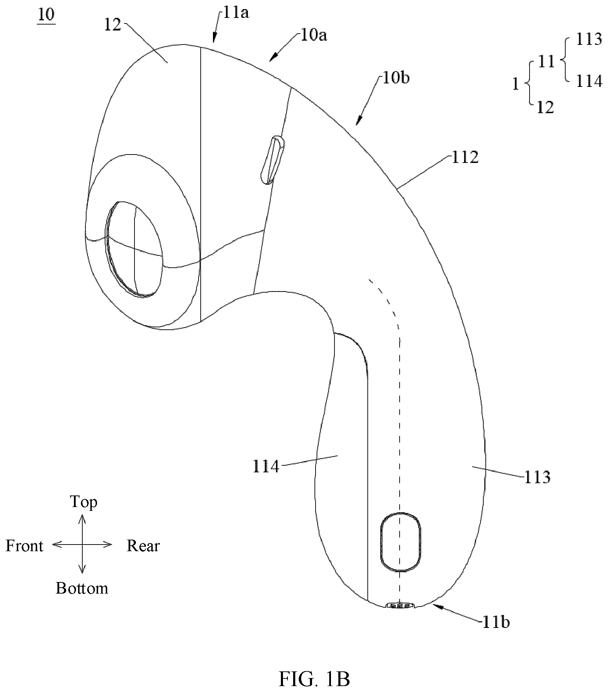

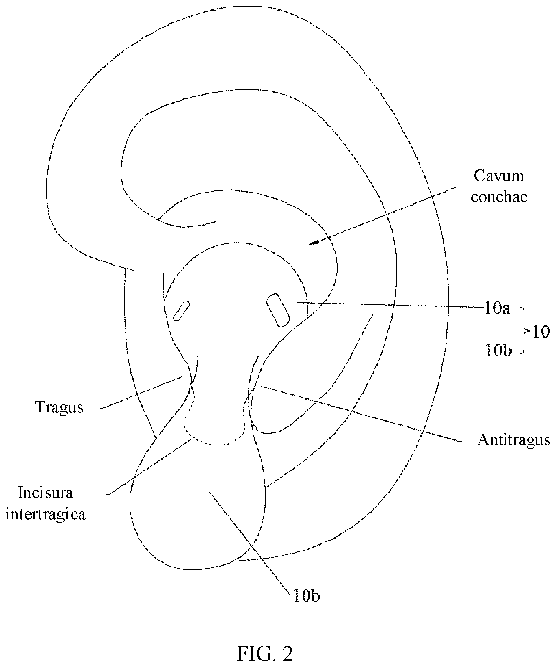

Refer to FIG. 1A, FIG. 1B, and FIG. 2. FIG. 1A is a rear view of an earphone 10 in some embodiments according to this application, FIG. 1B is a left view of the earphone 10 shown in FIG. 1A, and FIG. 2 is a diagram of a structure of the earphone 10 shown in FIG. 1A in some use scenarios.

This application provides an earphone 10. The earphone 10 is a wireless earphone, for example, may be a TWS (True Wireless Stereo, true wireless stereo) earphone. For ease of description in the following, it is defined as follows: The earphone 10 has relative orientations "top" and "bottom", which correspond to a height direction of the earphone 10; the earphone 10 has relative orientations "left" and "right", which correspond to a width direction of the earphone 10; and the earphone 10 has relative orientations "front" and "rear", which correspond to a thickness direction of the earphone 10. In descriptions of some embodiments, an orientation "upper" corresponds to the orientation "top", and an orientation "lower" corresponds to the orientation "bottom".

The earphone 10 includes an earbud 10a and a stem 10b. The stem 10b may also be referred to as a handle, and a top part of the stem 10b is connected to a rear side of the earbud 10a. An outer surface of the earphone 10 is a geometric curved surface that implements a smooth transition. In a direction from an end connected to the earbud 10a to an end that is far away from the earbud 10a, an outer contour of the stem 10b is in a form of first shrinking, then expanding, and then shrinking, and the stem 10b is as round and natural as a freely falling water drop. For example, the earphone 10 may have a central surface 10c, and a central axis 10d of the earbud 10a may be inclined to the central surface 10c. When the earphone 10 is used as a left earphone, a bottom end of the central axis 10d of the earbud 10a may be deflected to the left relative to the central surface 10c, and a top end of the central axis 10d of the earbud 10a may be deflected to the right relative to the central surface 10c. When the earphone 10 is used as a right earphone, a bottom end of the central axis 10d of the earbud 10a may be deflected to the right relative to the central surface 10c, and a top end of the central axis 10d of the earbud 10a may be deflected to the left relative to the central surface 10c. For example, the outer contour of the stem 10b may be symmetrically disposed relative to the central surface 10c.

When the earphone 10 is worn on an ear of a consumer, a front side of the earphone 10 faces the ear, and a rear side of the earphone 10 faces away from the ear. The front side of the earphone 10 is mostly an invisible region, and the rear side of the earphone 10 is mostly a visible region. The earbud 10a of the earphone 10 is inserted into the cavum conchae of the ear, the top part of the stem 10b is located in the cavum conchae, and a bottom part of the stem 10b is located outside the cavum conchae. The tragus, incisura intertragica, and antitragus of the ear may just surround a shrinking part of the stem 10b, to clamp the shrinking part of the stem 10b, so that wearing stability of the earphone 10 is improved, and wearing comfort can be considered, to improve user experience.

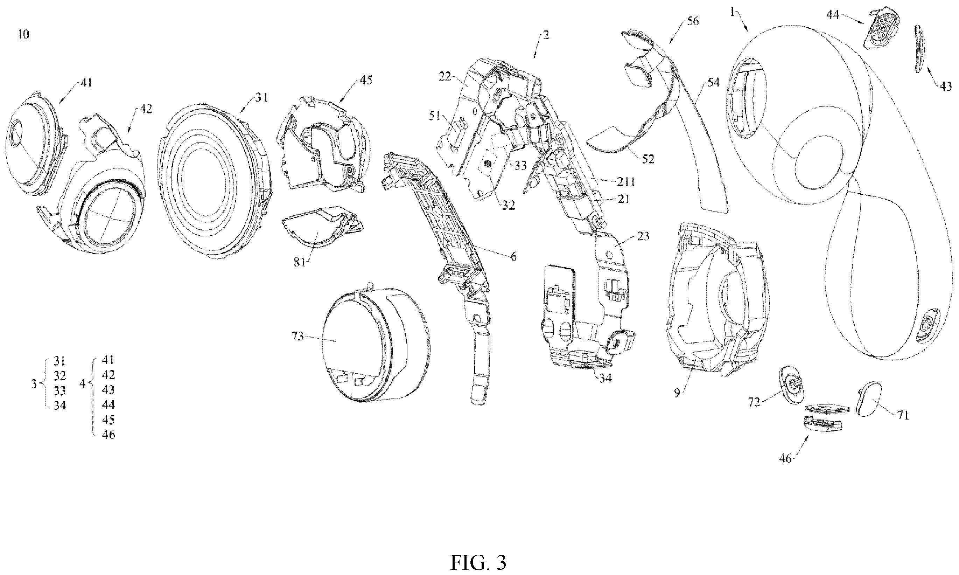

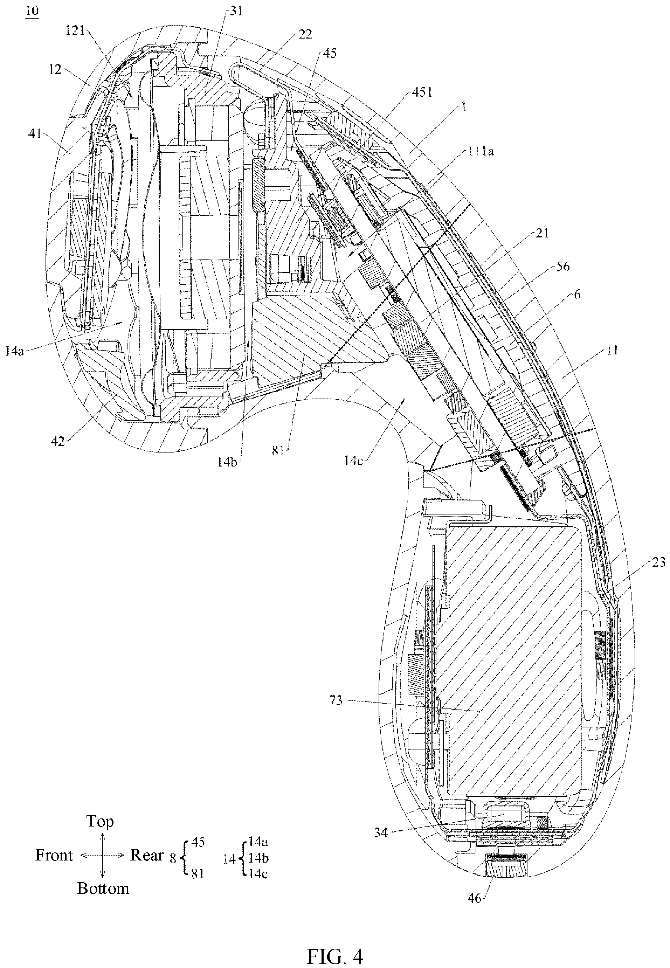

Refer to FIG. 3 and FIG. 4. FIG. 3 is a diagram of a partial exploded structure of the earphone 10 shown in FIG. 1A, and FIG. 4 is a diagram of a cross-sectional structure that is of the earphone 10 shown in FIG. 1A and that is taken along A-A. A-A corresponds to the central surface 10c of the earphone 10.

In some embodiments, the earphone 10 includes a housing 1 and a plurality of assemblies mounted in the housing 1. The plurality of assemblies include but are not limited to a circuit assembly 2, an audio assembly 3, an audio auxiliary assembly 4, a detection assembly 5, an antenna 6, a first contact 71, a second contact 72, a battery 73, and a magnetic attraction member 81.

For example, the circuit assembly 2 may include a main circuit board 21, a first flexible circuit board 22, and a second flexible circuit board 23. A plurality of components may be fastened on each circuit board. For example, a main control chip 211 may be arranged on the main circuit board 21, and the main control chip 211 may be a system on chip (System on Chip, SoC). A plurality of circuits may be integrated into the main control chip 211. One end of the first flexible circuit board 22 is electrically connected to the main circuit board 21, and one end of the second flexible circuit board 23 is electrically connected to the main circuit board 21, to implement electrical connections between components on the circuit boards. The circuit assembly 2 is electrically connected to another functional component, module, and the like of the earphone 10.

For example, the audio assembly 3 may include a speaker 31 and a plurality of microphones, to implement sound playing and sound pickup. The speaker 31 may also be referred to as a "horn", and is configured to convert an audio electrical signal into a sound signal. The microphone is configured to convert a sound signal into an electrical signal, and is mainly configured to: collect a sound outside the earphone 10, convert the sound into an electrical signal, and transmit the electrical signal to the main control chip 211 for processing, to implement functions such as active noise reduction, a voice call, call noise reduction, an ambient sound mode, and voice assistant wakeup of the earphone 10.

The plurality of microphones may include a first microphone 32, a second microphone 33, and a third microphone 34. In this application, the first microphone 32 and the second microphone 33 in the audio assembly 3 of the earphone 10 are used in an active noise cancelling (Active Noise Cancelling, ANC) design system. Active noise cancelling is a method for identifying an unwanted sound source as noise, and a design of eliminating original noise by generating an "anti-noise" signal, to eliminate noise in real time. The second microphone 33 may be an FF (Feedforward topology, feedforward topology) microphone. The FF microphone is a reference microphone facing an outside of a user ear, and is configured to sense a main noise signal that may be used as a reference signal of a forward active noise cancelling filter. The first microphone 32 may be an FB (Feedback Topology, feedback topology) microphone. The FB microphone is an error microphone, and is configured to collect, as a reference signal of a feedback active noise cancelling filter, a signal entering the user ear. The third microphone 34 may be a call microphone.

For example, the audio auxiliary assembly 4 is configured to provide a plurality of channels, to assist the audio assembly 3 in implementing sound playing, sound pickup, and the like. The audio auxiliary assembly 4 may include a first assembly 41, a second assembly 42, a third assembly 43, a fourth assembly 44, a fifth assembly 45, and a sixth assembly 46. The plurality of assemblies are mounted at different positions of the housing 1, and are configured to provide corresponding channels for a plurality of parts in the audio assembly 3.

For example, the detection assembly 5 includes a plurality of sensors. The plurality of sensors may include a proximity sensor 51, a wearing detection sensor 52, a Hall sensor (Hall sensor) (not shown in the figure), a touch sensor 54, a gravity sensor (g-sensor) (not shown in the figure), and the like. The proximity sensor 51 and the wearing detection sensor 52 are configured to implement wearing detection of the earphone 10. The Hall sensor is configured to implement in-case presence detection of the earphone 10. The touch sensor 54 is configured to detect a touch action of a user. The gravity sensor is configured to detect a posture change of the earphone 10. The touch sensor 54 and the gravity sensor are configured to improve man-machine interaction experience of the earphone 10. The wearing detection sensor 52 and the touch sensor 54 may be capacitive sensors (cap sensors). The detection assembly 5 may include a detection circuit board 56. The detection circuit board 56 forms the wearing detection sensor 52 and the touch sensor 54.

In some use scenarios, the earphone 10 may determine, by using a wearing detection function, whether the user wears/takes off the earphone 10, to automatically play/pause music. In some other use scenarios, if the user takes off the earphone 10, does not wear the earphone 10 for a long time, and does not put the earphone 10 back into a charging case, the earphone 10 automatically sleeps/powers off, to save power. In some other use scenarios, to improve experience of single/dual-ear use of the earphone 10, when two earphones 10 are worn, both the two earphones 10 play music, and when one earphone 10 is taken off and the other earphone 10 is worn, the earphone 10 that is not being worn stops playing music, and the earphone 10 that is being worn continues to play, to implement seamless switching.

In some use scenarios, the earphone 10 may detect different touch actions or operation actions of the user by using a man-machine interaction function, to implement functions such as music playing/pause, music switching, volume adjustment, and intelligent voice wakeup of the earphone 10. In this way, during use, the earphone 10 may be disconnected, to some extent, from a terminal (a mobile phone, a tablet, or the like) connected to the earphone 10, and an operation is more convenient and quick, to help improve user experience.

For example, the antenna 6 is configured to implement wireless communication between the earphone 10 and another terminal (for example, a mobile phone, a tablet, or the like). The battery 73 is configured to supply power to the earphone 10. The first contact 71 and the second contact 72 are configured to: when the earphone 10 is accommodated in the charging case, implement communication with the charging case, and implement a process of charging the earphone 10 by the charging case. The magnetic attraction member 81 is configured to form magnetic attraction force with the charging case when the earphone 10 is placed in the case, so that the earphone 10 is stably placed in the charging case.

In some other embodiments of this application, the earphone 10 may include more or fewer parts than those in the foregoing embodiment, some parts may be combined, some parts may be split, or different part arrangements may be used. The parts of the earphone 10 may be implemented by hardware, software, or a combination of software and hardware.

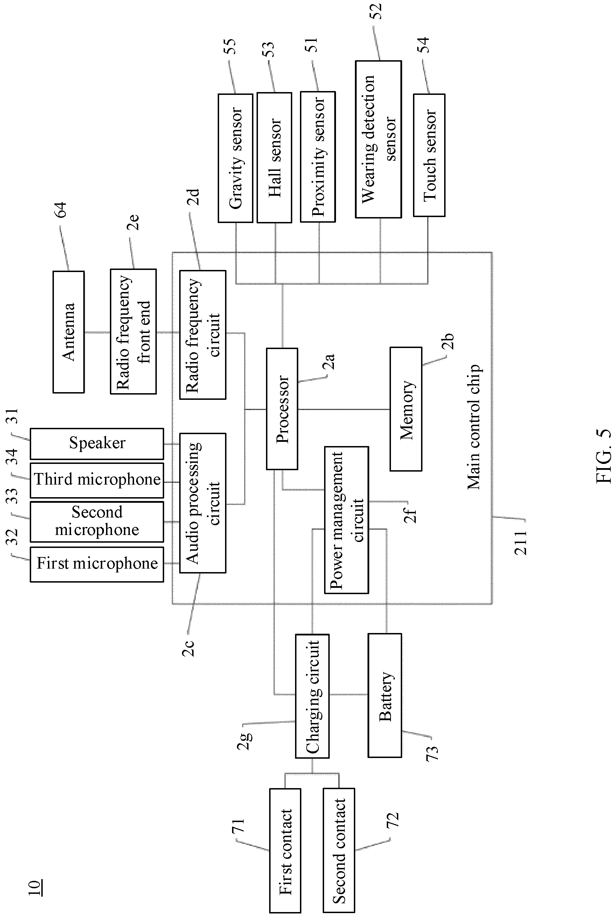

Refer to FIG. 5. FIG. 5 is a block diagram of some circuits of the earphone 10 shown in FIG. 1A.

In some embodiments, the earphone 10 may include a processor 2a, a memory 2b, an audio processing circuit 2c, a radio frequency circuit 2d, a radio frequency front end 2e, a power management circuit 2f, a charging circuit 2g, and the like. The processor 2a is electrically connected to the memory 2b.

All of the speaker 31, the first microphone 32, the second microphone 33, and the third microphone 34 are electrically connected to the audio processing circuit 2c, and the audio processing circuit 2c is electrically connected to the processor 2a. The audio processing circuit 2c is configured to convert digital audio information into an analog audio signal for output, and is further configured to convert an analog audio input into a digital audio signal. The audio processing circuit 2c may be further configured to encode and decode an audio signal. In some embodiments, the audio processing circuit 2c may alternatively be disposed in the processor 2a, or some functional modules of the audio processing circuit 2c are disposed in the processor 2a.

The antenna 6 is connected to the radio frequency front end 2e, the radio frequency front end 2e is connected to the radio frequency circuit 2d, and the radio frequency circuit 2d is connected to the processor 2a. The radio frequency circuit 2d is configured to modulate a radio frequency signal or demodulate a radio frequency signal. The radio frequency front end 2e is configured to filter and amplify the radio frequency signal. The radio frequency front end 2e may include one or more of a power amplifier (Power Amplifier, PA), a filter, a switch (Switch), and a low noise amplifier (LNA, Low Noise Amplifier). The filter may be a surface acoustic wave (surface acoustic wave, SAW) filter.

The first contact 71 and the second contact 72 are electrically connected to the charging circuit 2g, and the charging circuit 2g is electrically connected to the processor 2a, the power management circuit 2f, and the battery 73. The charging circuit 2g is configured to receive a charging input through the first contact 71 and the second contact 72. The power management circuit 2f is electrically connected to the processor 2a. The power management circuit 2f receives an input from the battery 73 and/or the charging circuit 2g, and supplies power to the processor 2a, the memory 2b, and other parts. In some other embodiments, the power management circuit 2f may alternatively be disposed in the processor 2a. In some other embodiments, the power management circuit 2f and the charging circuit 2g may alternatively be disposed in a same component.

All of the proximity sensor 51, the wearing detection sensor 52, the Hall sensor 53, the touch sensor 54, and the gravity sensor 55 are electrically connected to the processor 2a.

The processor 2a, the memory 2b, the audio processing circuit 2c, the radio frequency circuit 2d, and the power management circuit 2f may be integrated into the main control chip 211. The radio frequency front end 2e and the charging circuit 2g may be respectively formed in other chips. In some other embodiments, the foregoing circuit may have another implementation structure. For example, more or fewer circuits may be integrated into the main control chip 211. For example, the radio frequency circuit 2d may be independent of the main control chip 211 and implemented by a radio frequency chip. This is not strictly limited in this embodiment of this application.

The following describes the parts/components of the earphone 10 by using examples.

### Housing 1 of the earphone 10:

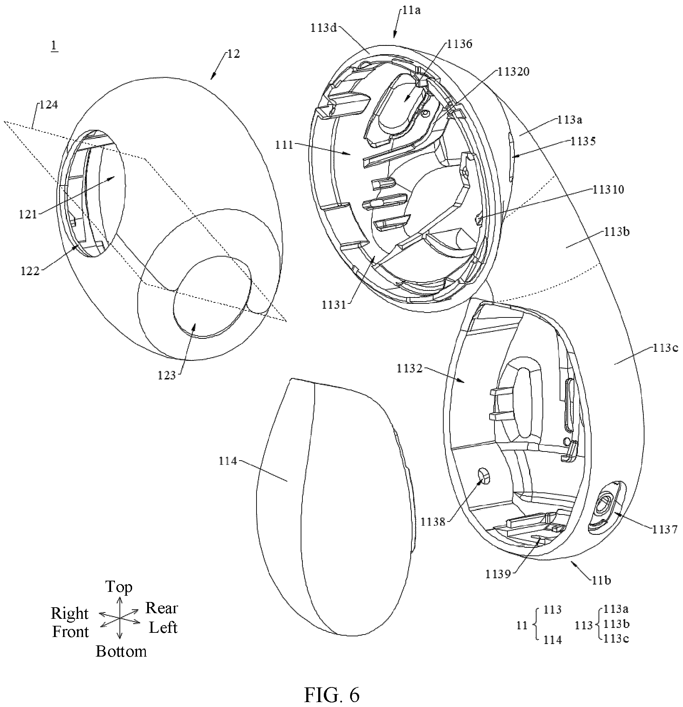

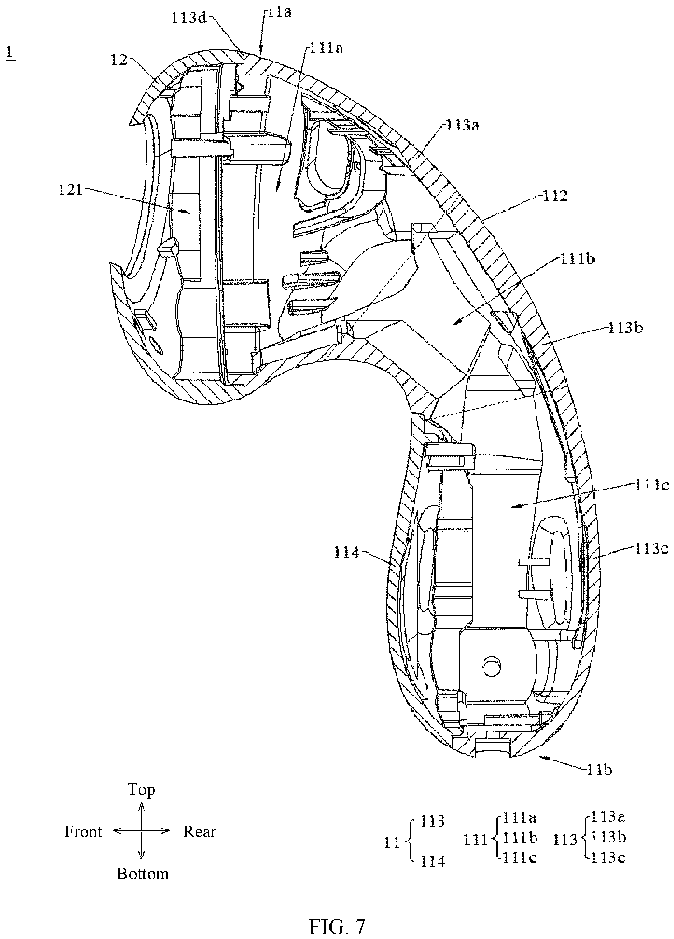

Refer to FIG. 1A, FIG. 1B, FIG. 6, and FIG. 7. FIG. 6 is a diagram of an exploded structure of the housing 1 shown in FIG. 3, and FIG. 7 is a diagram of an internal structure of the housing 1 shown in FIG. 3.

In some embodiments, the housing 1 includes a main housing 11 and a front housing 12, the front housing 12 is fastened on a front side of the main housing 11, and internal space 121 of the front housing 12 communicates with internal space 111 of the main housing 11. When the earphone 10 is being worn, the front housing 12 faces a user ear. Specifically, the front housing 12 may be located in the cavum conchae, be in contact with the cavum conchae, and face an ear canal of the user ear. The front housing 12 and a partial structure that is of the main housing 11 and that is connected to the front housing 12 form a housing of the earbud 10a of the earphone 10, and the other partial structure of the main housing 11 forms a housing of the stem 10b of the earphone 10.

The main housing 11 includes a first end 11a and a second end 11b. The first end 11a of the main housing 11 is close to the front housing 12, and is in contact with the front housing 12, and the second end 11b of the main housing 11 is far away from the front housing 12. The main housing 11 has a dorsal line 112, and the dorsal line 112 extends from the first end 11a of the main housing 11 to the second end 11b of the main housing 11. The dorsal line 112 is located on a rear side of the main housing 11, and the dorsal line 112 is located on the central surface 10c of the earphone 10. The dorsal line 112 is a smooth curve. As shown in FIG. 1B, when the earphone 10 is in a left view, a contour line of a side (that is, a side facing away from the front housing 12) that is of the main housing 11 and that faces backward corresponds to the dorsal line 112. The dorsal line 112 may be a solid line, or may be a non-solid line. This is not strictly limited in this embodiment of this application.

For example, in a direction from the first end 11a of the main housing 11 to the second end 11b of the main housing 11, an outer contour of the main housing 11 first shrinks and then expands. A case in which the outer contour of the main housing 11 first shrinks and then expands includes a first case in which the outer contour of the main housing 11 first shrinks, then expands, and then shrinks, and a second case in which the outer contour of the main housing 11 first shrinks and then expands.

For the first case, in the direction from the first end 11a of the main housing 11 to the second end 11b of the main housing 11, a part that is of the main housing 11 and that is located on the earbud 10a is in a shrinking form, and a part that is of the main housing 11 and that is located on the stem 10b is in a form of first shrinking, then expanding, and then shrinking, and at a bottom part of the main housing 11, a bottom end face may be formed by an arc-shaped surface or an approximately arc-shaped surface, to have a rounded form. In this case, a shape of the main housing 11 is designed, so that the stem 10b of the earphone 10 can have a shape similar to that of a "freely falling water drop".

For the second case, in the direction from the first end 11a of the main housing 11 to the second end 11b of the main housing 11, a part that is of the main housing 11 and that is located on the earbud 10a is in a shrinking form, and a part that is of the main housing 11 and that is located on the stem 10b first shrinks and then expands, that is, at a bottom part of the main housing 11, a bottom end face may be formed by a plane or an approximate plane. In the second case, a small rounded transition region connected to the bottom end face may exist at the bottom part of the main housing 11, and a form change of this part of transition region is small and may be ignored.

For example, as shown in FIG. 7, the internal space 111 of the main housing 11 includes top space 111a, middle space 111b, and bottom space 111c that sequentially communicate with each other, the top space 111a of the main housing 11 is close to the first end 11a of the main housing 11, and the bottom space 111c of the main housing 11 is close to the second end 11b of the main housing 11. The top space 111a of the main housing 11 is connected to the internal space 121 of the front housing 12. In the direction from the first end 11a of the main housing 11 to the second end 11b of the main housing 11, the internal space 111 of the main housing 11 first shrinks and then expands. A cross-sectional area of the top space 111a of the main housing 11 is basically greater than a cross-sectional area of the middle space 111b of the main housing 11, and a cross-sectional area of the bottom space 111c of the main housing 11 is basically greater than the cross-sectional area of the middle space 111b of the main housing 11. That is, a narrowest position in the internal space 111 of the main housing 11 is located in the middle space 111b of the main housing 11. In this embodiment, the main housing 11 is of a housing member structure, and a form change of the internal space 111 of the main housing 11 is the same as or similar to a form change of the outer contour of the main housing 11.

It may be understood that in the accompanying drawings of this embodiment of this application, division positions of the top space 111a, the middle space 111b, and the bottom space 111c of the main housing 11 are example positions, and are not strict and unique position division. In an overall design of the earphone 10, a requirement that the internal space 111 of the main housing 11 shrinks to the narrowest in the middle space 111b needs to be met, and the division positions of the top space 111a, the middle space 111b, and the bottom space 111c of the main housing 11 may be adaptively changed based on an actual situation.

For example, when the dorsal line 112 extends from the first end 11a of the main housing 11 to the second end 11b of the main housing 11, the dorsal line 112 first extends backward and then extends forward. A part that is of the main housing 11 and that corresponds to a line segment that extends backward and that is of the dorsal line 112 is in a form of first shrinking and then expanding. A part that is of the main housing 11 and that corresponds to a line segment that extends forward and that is of the dorsal line 112 is in a shrinking form. In this embodiment, a shape of the dorsal line 112 is set, so that a back of the earphone 10 is in a form that implements free sliding, and an overall form of the earphone 10 is natural and beautiful.

The dorsal line 112 may include a plurality of smoothly connected arc-shaped line segments. In an extension direction of the dorsal line 112, radii of the plurality of arc-shaped line segments first increase and then decrease. An arc-shaped line segment with a largest radius may be disposed to correspond to the middle space 111b of the main housing 11.

In some embodiments, as shown in FIG. 1B, FIG. 6, and FIG. 7, the main housing 11 includes a main housing member 113 and a sealing cover member 114. The main housing member 113 has a first opening 1131 and a second opening 1132 that are disposed at an interval, and both the first opening 1131 and the second opening 1132 are disposed to face forward. That is, when the earphone 10 is being worn, both the first opening 1131 and the second opening 1132 face the user ear. The main housing member 113 includes a top part 113a, a middle part 113b, and a bottom part 113c that are sequentially connected. The first opening 1131 is formed at the top part 113a of the main housing member 113, and the second opening 1132 is formed at the bottom part 113c of the main housing member 113. The front housing 12 is mounted at the first opening 1131, the sealing cover member 114 is mounted at the second opening 1132, and the sealing cover member 114 is located on a front side of the bottom part 113c of the main housing member 113. As shown in FIG. 7, inner side space of the top part 113a of the main housing member 113 forms the top space 111a of the main housing 11, inner side space of the middle part 113b of the main housing member 113 forms the middle space 111b of the main housing 11, and the sealing cover member 114 and a part (that is, the bottom part 113c of the main housing member 113) of the main housing member 113 jointly enclose the bottom space 111c of the main housing 11. The main housing member 113 may be an integrally formed structural member. For example, the main housing member 113 may be formed by using an injection molding process.

In this embodiment, the housing 1 mainly includes three housing members: the front housing 12, the main housing member 113, and the sealing cover member 114. The housing 1 includes such a few housing members that require no complex structure and are easy to assemble. In addition, the middle part 113b of the main housing member 113 is of a complete housing member structure, and no opening is disposed. This helps improve structural strength of the main housing member 113, so that overall structural strength of the main housing 11 and the housing 1 is high.

For example, with reference to FIG. 1A, FIG. 6, and FIG. 7, the main housing 11 includes an abutting end face 113d, the abutting end face 113d is located on the main housing member 113 and is disposed around the first opening 1131, and the abutting end face 113d is in contact with the front housing 12. A plane on which the abutting end face 113d is located is perpendicular to the central surface 10c of the earphone 10. The main housing member 113 has a first projection on the plane on which the abutting end face 113d is located, the sealing cover member 114 has a second projection on the plane on which the abutting end face 113d is located, and the first projection covers the second projection.

A surface of the earphone 10 in a rear view is a primary appearance surface, that is, in a case of viewing from back to front, an exposed surface of the earphone 10 is the primary appearance surface. A surface of the earphone 10 in a front view is a secondary appearance surface, that is, in a case of viewing from front to back, an exposed surface of the earphone 10 is the primary appearance surface. When the earphone 10 is being worn, the secondary appearance surface faces the user ear and is hidden, and the primary appearance surface faces away from the user ear and is exposed. The main housing member 113 is projected from back to front to form the first projection, and the sealing cover member 114 is projected from back to front to form the second projection. The first projection covers the second projection. Therefore, in the rear view of the earphone 10, the main housing member 113 blocks the sealing cover member 114, and a parting line between the sealing cover member 114 and the main housing member 113 is hidden on the secondary appearance surface of the earphone 10, so that the primary appearance surface of the earphone 10 is complete, to maintain good visual integrity. The parting line between the sealing cover member 114 and the main housing member 113 is a line formed on the appearance surface of the earphone 10 at a junction of the sealing cover member 114 and the main housing member 113. A maximum contour line of the main housing member 113 in a left-right direction is shown by a dashed line in FIG. 1B, and the parting line between the sealing cover member 114 and the main housing member 113 is located on a front side of the maximum contour line.

In some embodiments, an overall height of the earphone 10 may range from 35 mm to 45 mm, for example, 38 mm, 39.56 mm, 41.5 mm, 43.21 mm, or the like. An overall width of the earphone 10 may range from 19 mm to 26 mm, for example, 21 mm, 22.83 mm, 24.5 mm, or the like. An overall height of the main housing member 113 may range from 35 mm to 45 mm, for example, 37 mm, 39.38 mm, 41.2 mm, 42.8 mm, or the like. A thickness at a thickest position of the bottom part 113c of the main housing member 113 may range from 8 mm to 12 mm, for example, 8.2 mm, 9 mm, 9.74 mm, 10.11 mm, 10.53 mm, or the like. A width at a widest position of the bottom part 113c of the main housing member 113 may range from 11 mm to 16 mm, for example, 12 mm, 12.8 mm, 13.53 mm, 14.2 mm, or the like. A thickness at a narrowest position of the main housing member 113 in a front-rear direction may range from 6 mm to 8.5 mm, for example, 6.5 mm, 7.2 mm, 7.4 mm, or the like. A width at a narrowest position of the main housing member 113 in the left-right direction ranges from 5 mm to 8.5 mm, for example, 6.47 mm or the like. A spacing between the sealing cover member 114 and the front housing 12 may range from 5 mm to 8 mm, for example, 5.7 mm, 6 mm, 6.54 mm, 7.12 mm, or the like. An included angle between the central axis 10d of the earbud 10a and the central surface 10c may range from 50° to 70°, for example, 55°, 60°, 67°, or the like. An included angle between the abutting end face 113d of the main housing member 113 and a boundary line between the earbud 10a and the stem 10b may range from 7° to 10°, for example, 7.6°, 8.4°, 9.2°, or the like. In some other embodiments, one or more of the foregoing dimensions of the earphone 10 may be adjusted as required.

It may be understood that the foregoing descriptions of the structure of the housing 1 are merely example descriptions. In some other embodiments, the housing 1 may alternatively have another structure. This is not strictly limited in this application.

### Circuit assembly 2 of the earphone 10:

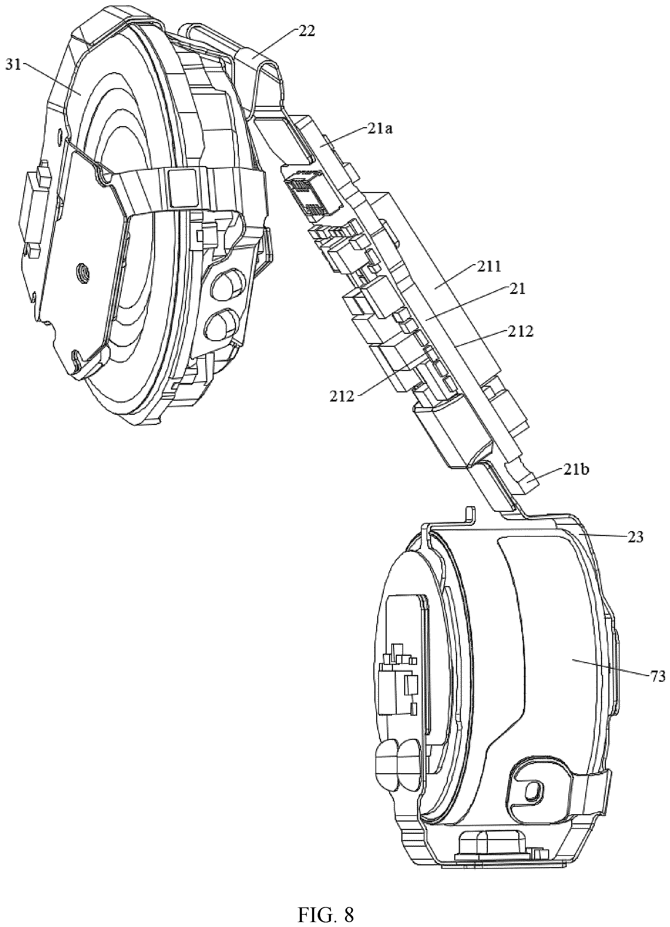

Refer to FIG. 3 and FIG. 8. FIG. 8 is a diagram of a partial structure of the earphone 10 shown in FIG. 1A.

In some embodiments, the main circuit board 21 includes a first end 21a and a second end 21b that are opposite to each other. The first end 21a of the main circuit board 21 is close to the speaker 31, and the second end 21b of the main circuit board 21 is close to the battery 73. The first flexible circuit board 22 and the speaker 31 are located on a same side of the main circuit board 21, and the first flexible circuit board 22 is electrically connected to the speaker 31 and the first end 21a of the main circuit board 21. The second flexible circuit board 23 and the battery 73 are located on a same side of the main circuit board 21, and the second flexible circuit board 23 is electrically connected to the battery 73 and the second end 21b of the main circuit board 21.

In this embodiment, the main circuit board 21 is a rigid printed circuit board, to have sufficient structural strength, so that a large quantity of components can be arranged on a component arrangement plane, and component arrangement can be implemented on two sides, to improve component integration. The first flexible circuit board 22 and the second flexible circuit board 23 may be bent, and the first flexible circuit board 22 and the second flexible circuit board 23 may be flexibly arranged based on an internal space shape of the earphone 10 and a structure of another part, so that a circuit in the circuit assembly 2 can smoothly extend outward from the main circuit board 21, and is electrically connected to another part (for example, the speaker 31 and the battery 73) of the earphone 10.

The first flexible circuit board 22 may be wound from a rear side of the speaker 31 to a front side of the speaker 31, and a plurality of parts of the first flexible circuit board 22 at different positions may be connected to different components, to improve component integration of the earphone 10. The second flexible circuit board 23 partially surrounds the battery 73, and a plurality of parts of the second flexible circuit board 23 at different positions may be connected to different components, to improve component integration of the earphone 10.

For example, the main circuit board 21 is fixedly connected to the first flexible circuit board 22 by using a BOF (Board on FPC) process, and the main circuit board 21 is fixedly connected to the second flexible circuit board 23 by using the BOF process. The BOF process means a process in which the main circuit board 21 is directly mounted on an FPC. In this embodiment, a bilateral BOF process is used for the electrical connections between the main circuit board 21 and both the first flexible circuit board 22 and the second flexible circuit board 23. This can effectively save component arrangement space of the main circuit board 21 and internal stacking space of the earphone 10, to help reduce costs.

In some other embodiments, the electrical connections between the main circuit board 21 and both the first flexible circuit board 22 and the second flexible circuit board 23 may have other implementations. For example, the electrical connections may be implemented by using a board-to-board (Board-to-board, BTB) connector or a zero insertion force (Zero Insertion Force, ZIF) connector, or the electrical connections may be implemented by using a rigid-flex board solution.

As shown in FIG. 8, for example, both of two board surfaces that are of the main circuit board 21 and that are disposed opposite to each other are component arrangement planes 212, and component arrangement is implemented on the main circuit board 21 on two sides, to fully use board surface space and improve utilization of internal space of the earphone 10. In this embodiment, the main circuit board 21 is of a single-board structure. In some other embodiments, the main circuit board 21 may alternatively be of a multi-board structure, for example, a sandwich structure (that is, a circuit board-component-circuit board structure). This is not strictly limited in this embodiment of this application.

For example, in addition to the main control chip 211, other components, for example, the gravity sensor, the Hall sensor, the radio frequency front end, and the like, of the earphone 10 may be further arranged on the main circuit board 21. A specific component arranged on the main circuit board 21 is not strictly limited in this application.

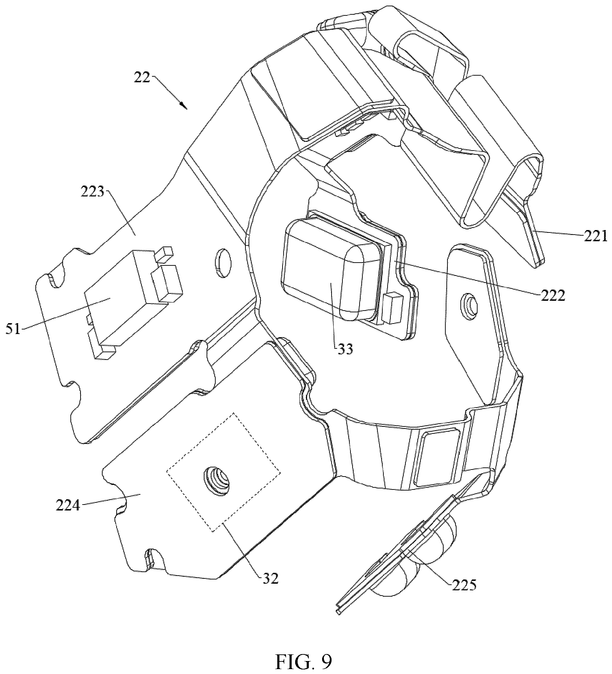

Refer to FIG. 9. FIG. 9 is a diagram of structures of the first flexible circuit board 22 and some components shown in FIG. 8.

In some embodiments, the first flexible circuit board 22 includes an interface part 221 and a plurality of connection parts. The plurality of connection parts may have a plurality of arrangement manners and connection structures. All of the plurality of connection parts are electrically connected to the interface part 221, and the interface part 221 is configured to be electrically connected to the main circuit board 21. The plurality of connection parts may include a first part 222, a second part 223, a third part 224, and a fourth part 225. For example, the second microphone 33 is fastened and electrically connected to the first part 222, and the first part 222 may be further fastened and electrically connected to a fitting component of the second microphone 33. The proximity sensor 51 is electrically connected to the second part 223, and the second part 223 may be further fastened and electrically connected to a fitting component of the proximity sensor 51. The first microphone 32 is fastened and electrically connected to the third part 224, and the third part 224 may be further fastened and electrically connected to a fitting component of the first microphone 32. The fourth part 225 is configured to be electrically connected to the speaker 31. One/Some parts of the first flexible circuit board 22 may be further configured to implement fastening to another part, so that a mounting position of the first flexible circuit board 22 in the earphone 10 is stable and reliable. One/Some parts of the first flexible circuit board 22 may be further used to arrange another circuit component. A stiffener may be disposed at a part that is of the first flexible circuit board 22 and that is used to fasten a component, to increase support strength and improve reliability.

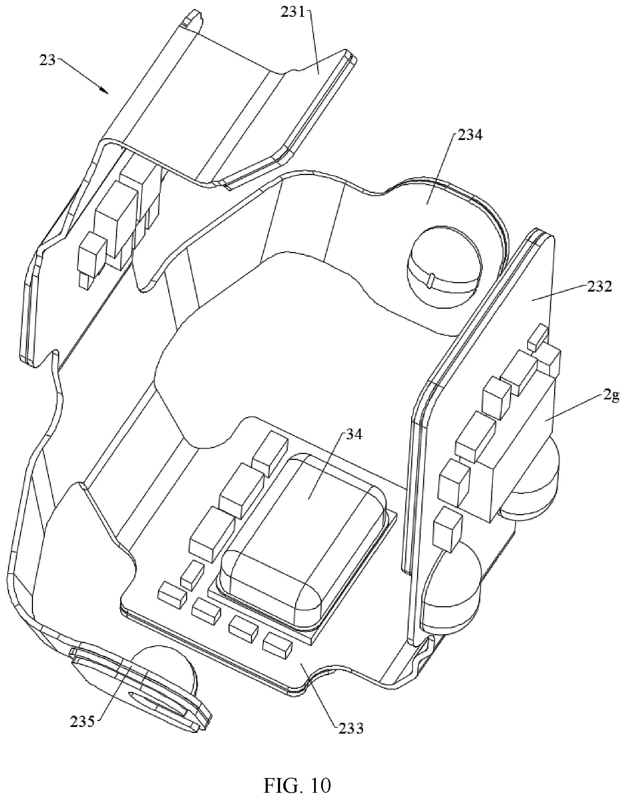

Refer to FIG. 10. FIG. 10 is a diagram of structures of the second flexible circuit board 23 and some components shown in FIG. 8.

In some embodiments, the second flexible circuit board 23 includes an interface part 231 and a plurality of connection parts. The plurality of connection parts may have a plurality of arrangement manners and connection structures. All of the plurality of connection parts are electrically connected to the interface part 231, and the interface part 231 is configured to be electrically connected to the main circuit board 21. The plurality of connection parts may include a first part 232, a second part 233, a third part 234, and a fourth part 235. For example, the first part 232 is configured to be electrically connected to the battery 73, and the charging circuit 2g and a fitting component thereof may be further fastened to the first part 232. The third microphone 34 is electrically connected to the second part 233, and the second part 233 may be further fastened and electrically connected to a fitting component of the third microphone 34. The third part 234 and the fourth part 235 may be respectively configured to be connected to the first contact 71 and the second contact 72. This part of content is described below. One/Some parts of the second flexible circuit board 23 may be further configured to implement fastening to another part, so that a mounting position of the second flexible circuit board 23 in the earphone 10 is stable and reliable. One/Some parts of the second flexible circuit board 23 may be further used to arrange another circuit component. A stiffener may be disposed at a part that is of the second flexible circuit board 23 and that is used to fasten a component, to increase support strength and improve reliability.

### Cavity division of the earphone 10:

With reference to FIG. 3 and FIG. 4 again, the magnetic attraction member 81 of the earphone 10 is located below the fifth assembly 45 in the audio auxiliary assembly 4, and the fifth assembly 45 and the magnetic attraction member 81 jointly form a separation assembly 8. The separation assembly 8 is mounted in the top space 111a of the main housing 11 and is located between the speaker 31 and the main circuit board 21. The internal space 14 of the housing 1 includes a front cavity 14a, a rear cavity 14b, and a main board cavity 14c. The front cavity 14a is located between the front housing 12 and the speaker 31, the rear cavity 14b is located between the speaker 31 and the separation assembly 8, and the main board cavity 14c is located on a side that is of the separation assembly 8 and that faces away from the speaker 31.

The main circuit board 21, the second flexible circuit board 23, the antenna 6, the battery 73, and the like may be located in the main board cavity 14c. The first flexible circuit board 22 may extend from the main board cavity 14c to the rear cavity 14b and the front cavity 14a. In the audio auxiliary assembly 4, some components are located in the main board cavity 14c, and some components are located in the front cavity 14a.

For example, a peripheral edge of the speaker 31 is hermetically connected to an inner wall of the front housing 12. In this case, the front cavity 14a and the rear cavity 14b are separated from each other and do not communicate with each other. The front housing 12 is hermetically connected to the main housing 11, the fifth assembly 45 is hermetically connected to the magnetic attraction member 81, and a peripheral edge of the separation assembly 8 is hermetically connected to an inner wall of the main housing 11. The main board cavity 14c may be designed as a sealed cavity.

### Antenna 6 of the earphone 10:

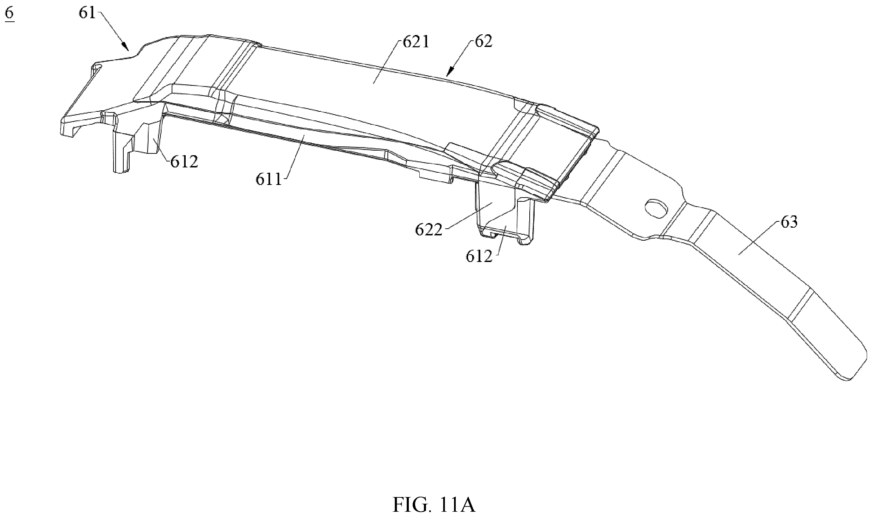

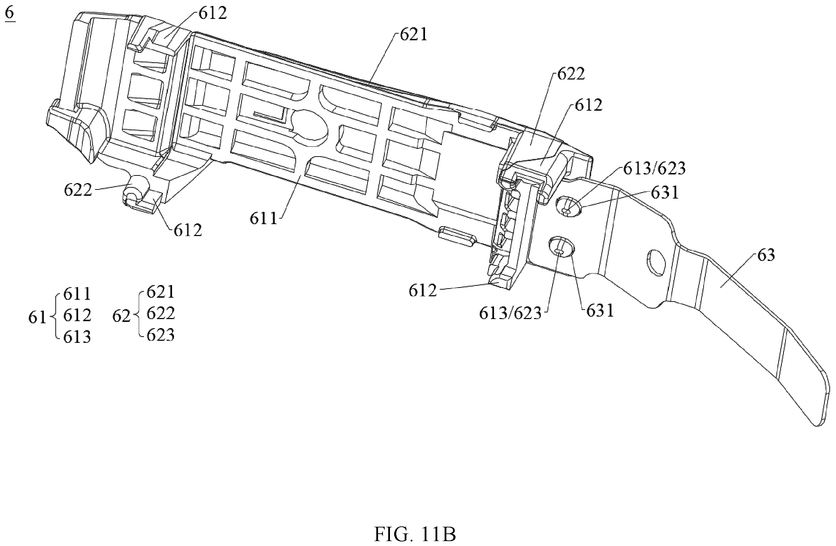

Refer to FIG. 11A and FIG. 11B. FIG. 11A is a diagram of a structure of the antenna 6 of the earphone 10 shown in FIG. 3, and FIG. 11B is a diagram of a structure of the antenna 6 shown in FIG. 11A at another angle.

In some embodiments, the antenna 6 includes an antenna support 61, a first metal piece 62, and a second metal piece 63.

The antenna support 61 includes a plate body 611, and a support foot 612 and a protrusion 613 that are fastened to the plate body 611. The support foot 612 and the protrusion 613 are located on a same side of the plate body 611 and are disposed at an interval from each other. There may be a plurality of support feet 612, the plurality of support feet 612 are disposed at an interval from each other, and the plurality of support feet 612 may be fastened around the plate body 611. There may be one or more protrusions 613, and the protrusions 613 may be fastened to one end of the plate body 611. The antenna support 61 may be an integrally formed structural member.

The first metal piece 62 is a patterned metal layer, and the first metal piece 62 may be formed on the antenna support 61 by using an LDS (Laser Direct Structuring, laser direct structuring) process, to be fastened to the antenna support 61. In this case, a dimension and a shape of the first metal piece 62 are less constrained, and a pattern of the first metal piece 62 is easy to adjust. The first metal piece 62 includes a main body part 621, a connection part 622, and an extension part 623. The main body part 621 is fastened on a top side of the plate body 611 of the antenna support 61. The connection part 622 is connected to the main body part 621, and extends to at least one support foot 612 of the plurality of support feet 612 of the antenna support 61. For example, there may be a plurality of connection parts 622, and the plurality of connection parts 622 are connected to different positions of the main body part 621 and are fastened to different support feet 612 of the antenna support 61. Alternatively, there is one connection part 622, and the connection part 622 is fastened to one support foot 612 of the plurality of support feet 612. A quantity of connection parts 622 may be the same as or different from a quantity of support feet 612 of the antenna support 61. This is not strictly limited in this embodiment of this application. The connection part 622 may partially or completely wrap the corresponding support foot 612 of the antenna support 61. The extension part 623 is connected to the main body part 621, and extends to the protrusion 613 of the antenna support 61. The extension part 623 may partially or completely wrap the protrusion 613 of the antenna support 61.

The second metal piece 63 is fastened and electrically connected to the first metal piece 62. For example, one end of the second metal piece 63 is fastened and electrically connected to one end of the first metal piece 62, and the other end of the second metal piece 63 extends in a direction far away from the first metal piece 62. For example, the second metal piece 63 may be provided with a through hole 631, the second metal piece 63 is positioned with the protrusion 613 of the antenna support 61 by using the through hole 631, and the second metal piece 63 may be fastened and electrically connected to the extension part 623 of the first metal piece 62 through soldering.

In this embodiment, the first metal piece 62 and the second metal piece 63 may jointly form a radiation part of the antenna 6, and the radiation part of the antenna 6 has a large dimension. This increases a radiation area of the antenna 6, and improves transmit/receive performance of the antenna 6, so that the earphone 10 has good wireless communication performance. For example, all of the antenna support 61, the first metal piece 62, and the second metal piece 63 may be approximately strip-shaped, and the entire antenna 6 is approximately strip-shaped, to better match a shape of the housing 1 of the earphone 10 in a case of a large radiation area, so as to reduce mounting difficulty.

In some examples, the antenna 6 may include an extended circuit board. The extended circuit board is connected to the antenna support 61 and the first metal piece 62, and the extended circuit board includes the second metal piece 63. The second metal piece 63 may be formed by a conductive layer of the extended circuit board. The extended circuit board may be a flexible circuit board. In this embodiment, the second metal piece 63 is formed by the extended circuit board, and the extended circuit board is small in thickness, can be bent and deformed, has a low requirement for mounting space, and can be easily arranged in narrow space, for example, internal space of the stem 10b, to achieve an objective of extending the radiation area of the antenna 6 in the narrow space.

In some other examples, the second metal piece 63 may alternatively be made of a metal sheet material, for example, a metal plate such as a steel sheet or a structural member such as a metal support 451. Similarly, the antenna 6 may also achieve, by using the small thickness and easy bending performance of the second metal piece 63, an objective of extending the radiation area of the antenna 6 in narrow space.

In some other embodiments, the antenna support 61 may not be provided with the protrusion 613, the extension part 623 of the first metal piece 62 is adaptively changed, and the second metal piece 63 may be fastened and electrically connected to the first metal piece 62 by using another structure. This is not strictly limited in this embodiment of this application.

In some other embodiments, the antenna 6 may not be provided with the second metal piece 63, the antenna 6 includes the antenna support 61 and the first metal piece 62, and the first metal piece 62 forms the radiation part of the antenna 6.

In some other embodiments, the antenna 6 may alternatively have another implementation structure. For example, the antenna 6 may include a circuit board, and a conductive layer on the circuit board forms the radiation part of the antenna 6. The circuit board may be a flexible circuit board, a rigid-flex board, or a rigid board. This is not strictly limited in this embodiment of this application.

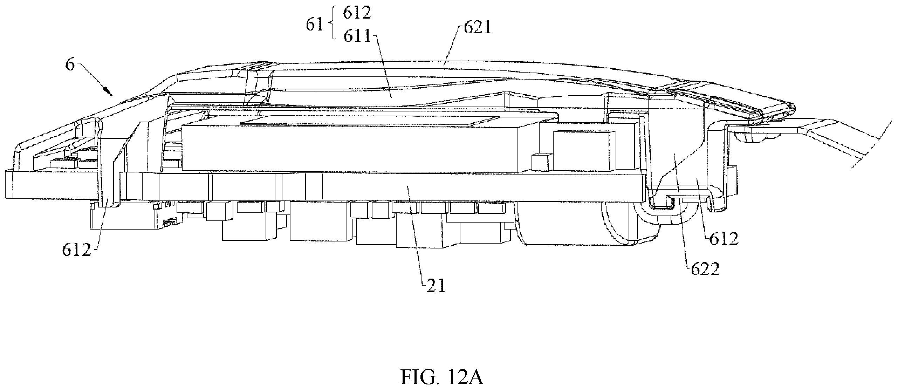

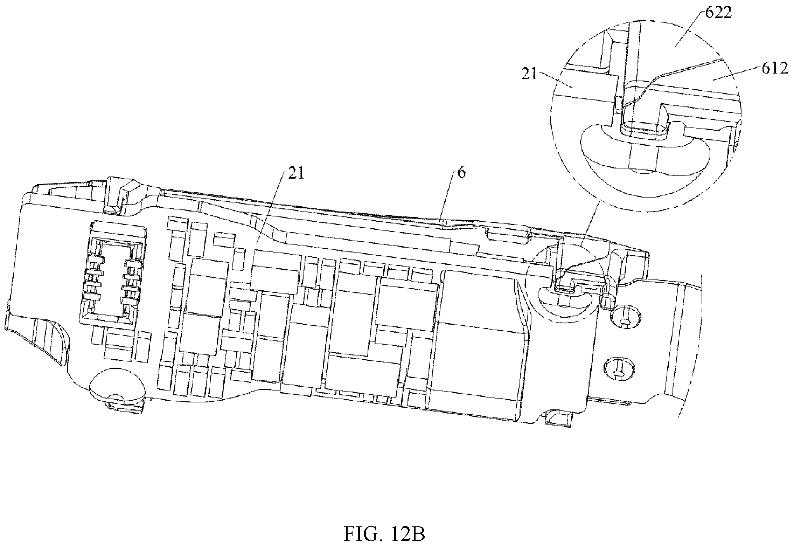

Refer to FIG. 12A and FIG. 12B. FIG. 12A is a diagram of an assembly structure of the antenna 6 and the main circuit board 21 shown in FIG. 3, and FIG. 12B is a diagram of a structure of the structure shown in FIG. 12A at another angle.

In some embodiments, the antenna 6 is fixedly connected to the main circuit board 21. The antenna 6 is located on one side of the main circuit board 21, the plate body 611 of the antenna support 61 is disposed at an interval from the main circuit board 21, and the plurality of support feet 612 of the antenna support 61 are fastened to the main circuit board 21, so that the antenna 6 is fastened relative to the main circuit board 21. Space is formed between the plate body 611 of the antenna support 61 and the main circuit board 21, and a component may be arranged on the main circuit board 21 by using the space.

The main body part 621 of the first metal piece 62 is located on a side that is of the plate body 611 of the antenna support 61 and that faces away from the main circuit board 21, and the connection part 622 of the first metal piece 62 is soldered to the main circuit board 21. In this case, the connection part 622 of the first metal piece 62 is fastened and electrically connected to the main circuit board 21 through tin soldering, so that the main circuit board 21 can feed the antenna 6. A radio frequency circuit is disposed on the main circuit board 21. The radio frequency circuit is electrically connected to the antenna 6, and the radio frequency circuit is further electrically connected to the processor.

In this embodiment, the first metal piece 62 forms the radiation part of the antenna 6 or a part of the radiation part, the first metal piece 62 and the main circuit board 21 share the support foot 612 of the antenna support 61, and the support foot 612 of the antenna support 61 is not only used to implement a structural connection function, but also used as a feed point of the antenna 6. Therefore, a conventional spring plate structure used as a feed point is omitted, and a large amount of plate arrangement space is saved, to facilitate arrangement of the antenna 6 in small space. In addition, a signal is transmitted between the antenna 6 and the main circuit board 21 without passing through an electrical connector. Therefore, signal noise of the antenna 6 is reduced, and wireless communication quality of the earphone 10 is improved.

There may be a plurality of support feet 612 of the antenna support 61 and connection parts 622 of the first metal piece 62, to implement a multi-point feeding solution of the antenna 6, so that a MIMO (Multiple-Input Multiple-Output, multiple-input multiple-output) solution of the antenna can be implemented in some embodiments.

In some other embodiments, an electrical connection relationship between the first metal piece 62 and the main circuit board 21 may alternatively be implemented by using another structure. That is, the main circuit board 21 may alternatively use another feeding structure to feed the antenna 6. For example, a conductive spring plate may be mounted on the main circuit board 21, and the first metal piece 62 and/or the second metal piece 63 are/is elastically pressed through the conductive spring plate; the first metal piece 62 and/or the second metal piece 63 are/is used to elastically press the main circuit board 21 through the conductive spring plate; or the second metal piece 63 is soldered to the main circuit board 21. A feeding structure of the antenna 6 is not strictly limited in this embodiment of this application.

### Touch sensor 54 of the earphone 10:

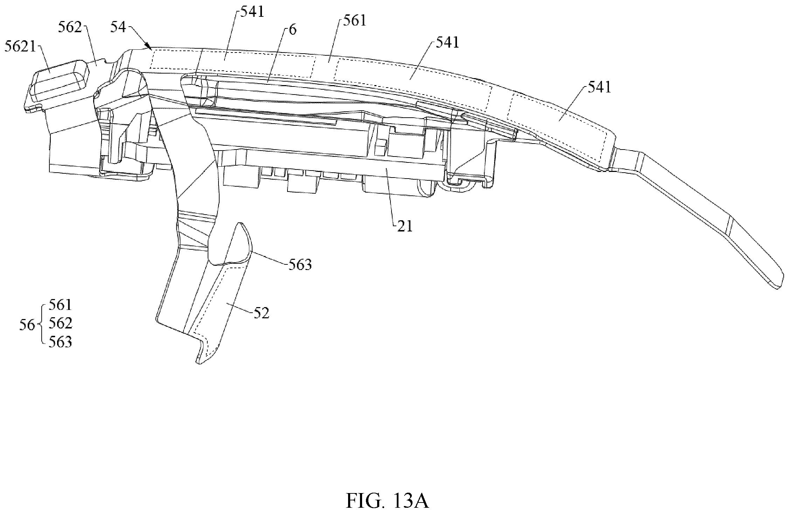

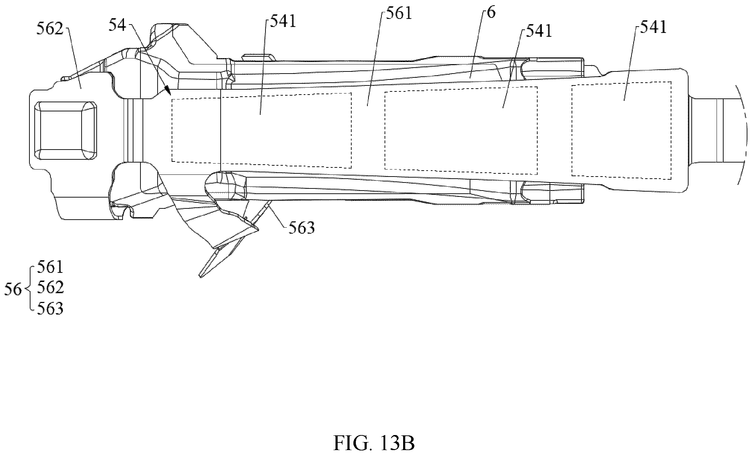

Refer to FIG. 13A and FIG. 13B. FIG. 13A is a diagram of an assembly structure of the main circuit board 21, the antenna 6, and the detection circuit board 56 shown in FIG. 3, and FIG. 13B is a diagram of a structure of the structure shown in FIG. 13A at another angle.

In some embodiments, the detection circuit board 56 includes a first circuit board 561, a second circuit board 562, and a third circuit board 563, and both the first circuit board 561 and the third circuit board 563 are electrically connected to the second circuit board 562. The first circuit board 561, the second circuit board 562, and the third circuit board 563 may be integrally formed structural members, and each is a part of the detection circuit board 56. The detection circuit board 56 may be a flexible circuit board, so that the first circuit board 561, the second circuit board 562, and the third circuit board 563 may be deformed, for example, bent, to meet assembly and connection requirements. The detection circuit board 56 and the antenna 6 are structural members independent of each other.

There may be the touch sensor 54 on the first circuit board 561, and the touch sensor 54 may be electrically connected to another structure by using the second circuit board 562. The wearing detection sensor 52 may be formed on the third circuit board 563, and the wearing detection sensor 52 may be electrically connected to another structure by using the second circuit board 562.

For example, the first circuit board 561 and the antenna 6 are structural members independent of each other. The first circuit board 561 may be disposed on a side that is of the antenna 6 and that faces away from the main circuit board 21, and is disposed in a stacked manner with the antenna 6, and there is a specific overlapping region between the first circuit board 561 and the antenna 6. For example, the first circuit board 561 is disposed in a stacked manner with the first metal piece 62 and/or the second metal piece 63 (referring to FIG. 11A) of the antenna 6, and there is a specific overlapping region. In this case, both the antenna support 61 and the antenna 6 are located between the first circuit board 561 and the main circuit board 21. One end of the third circuit board 563 may be connected to the first circuit board 561 or the second circuit board 562, and the other end of the third circuit board 563 is bent to a side that is of the main circuit board 21 and that faces away from the first circuit board 561. In this case, the third circuit board 563 is located on a side that is of the antenna 6 and that faces away from the first circuit board 561.

In some other embodiments, the third circuit board 563 and the first circuit board 561 may alternatively be circuit boards independent of each other, that is, different circuit boards, and the wearing detection sensor 52 on the third circuit board 563 may alternatively be electrically connected to the main circuit board 21 in another manner. This is not strictly limited in this embodiment of this application.

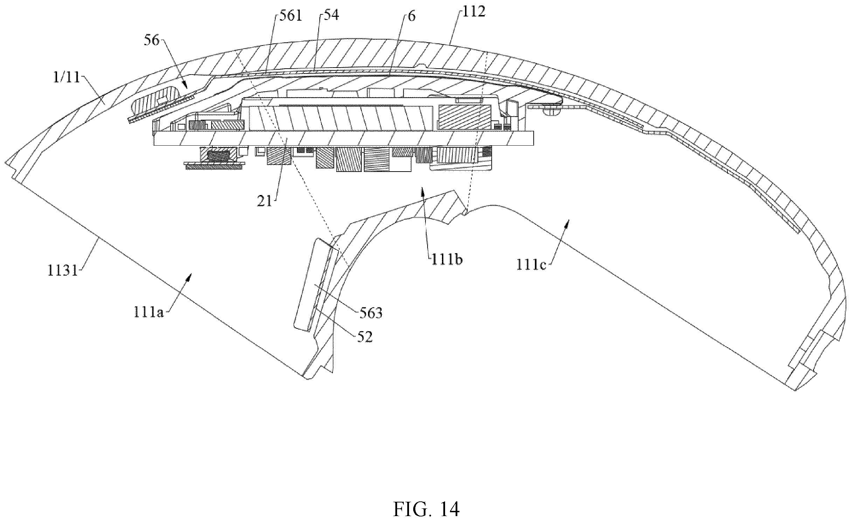

Refer to FIG. 14. FIG. 14 is a diagram of a partial structure of the earphone 10 shown in FIG. 4.

In some embodiments, all of the main circuit board 21, the antenna 6, and the detection circuit board 56 are located in the housing 1. The first circuit board 561 of the detection circuit board 56 is located between the antenna 6 and the housing 1. The touch sensor 54 is formed on a side that is of the first circuit board 561 and that faces the housing 1, and the touch sensor 54 is configured to detect a touch action performed on the housing 1.

The first circuit board 561 may be fastened to the inner wall of the main housing 11 of the housing 1, and the first circuit board 561 is disposed to face the dorsal line 112 of the main housing 11. That is, when the earphone is being worn, the first circuit board 561 faces away from the user ear. In this embodiment, the touch sensor 54 is a capacitive sensor (cap sensor). The first circuit board 561 is disposed close to the inner wall of the main housing 11 of the housing 1, and is at a position close to the dorsal line 112 of the main housing 11, and therefore when the earphone is being worn, faces away from the user ear and is exposed relative to the user ear. When the user approaches or touches a back of the main housing 11, the touch sensor 54 may detect a touch action of the user, to implement man-machine interaction.

The first circuit board 561 may extend from the top space 111a of the main housing 11 to the bottom space 111c of the main housing 11. The first circuit board 561 has a large area, so that the touch sensor has a large arrangement area, and more diversified touch actions can be detected.

For example, the third circuit board 563 may be located in the top space 111a of the main housing 11, the third circuit board 563 may be fastened to the main housing 11, and the wearing detection sensor 52 is formed on a side that is of the third circuit board 563 and that faces the main housing 11. In this embodiment, the wearing detection sensor 52 is a capacitive sensor (cap sensor). When the user wears the earphone 10, the incisura intertragica of the ear corresponds to a position of the wearing detection sensor 52, and the wearing detection sensor 52 may detect whether skin of the user is in contact with the earphone 10, to cooperate in detecting whether the earphone 10 is being worn. Detection accuracy of the wearing detection sensor 52 is high.

The earphone 10 cooperates, through detection by the proximity sensor 51 and the wearing detection sensor 52, in determining whether the earphone 10 is being worn. For example, when both the proximity sensor 51 and the wearing detection sensor 52 of the earphone 10 detect that the earphone 10 approaches or is in contact with the user, the earphone 10 determines that the earphone 10 is being worn, or if one of the proximity sensor 51 and the wearing detection sensor 52 detects that the user does not approach or is not in contact with the user, the earphone 10 determines that the earphone 10 is not being worn. Wearing detection of the earphone 10 may be a prerequisite for the touch sensor 54 to detect a touch operation of the user. The touch sensor 54 senses the touch operation of the user only when the earphone 10 determines that the earphone 10 is being worn.

With reference to FIG. 13A to FIG. 14, in this embodiment of this application, the antenna 6 is configured to transmit/receive a radio frequency signal, and the antenna 6 is further configured to provide a reference ground for the touch sensor 54. In this case, based on a relative position relationship between the main housing 11, the touch sensor 54, and the antenna 6, the antenna 6 in this application is compatible with two functions by using a same structure, and is not only used to implement wireless communication of the earphone 10, but also used as a reference ground of the touch sensor 54, to shield a cluttered signal and improve accuracy of touch detection.

In this embodiment, the touch sensor 54 and the antenna 6 of the earphone 10 coexist in a same space region, and occupied space is minimized, to facilitate miniaturization of the earphone 10. Furthermore, a radiation region of the antenna 6 and a touch control region of the touch sensor 54 may be implemented by using a same region of the main housing 11. When the main housing 11 has a fixed volume, both the radiation region of the antenna 6 and the touch control region of the touch sensor 54 may have a large area, so that the earphone 10 can obtain better transmit/receive performance of the antenna 6, and more diversified touch operations can be detected.

A side that is of the touch sensor 54 and that is used to detect a touch operation of the user is a touch side, and the other side of the touch sensor 54 is a non-touch side. In this embodiment, a side that is of the touch sensor 54 and that faces the main housing 11 is the touch side, and a side that is of the touch sensor 54 and that faces away from the main housing 11 is the non-touch side. The antenna 6 is located on the non-touch side of the touch sensor 54, and the antenna 6 is of a conductor structure. Therefore, the antenna 6 may be used as a reference ground of the touch sensor 54, to shield a cluttered signal (for example, a signal generated by the component on the main circuit board 21) from the non-touch side of the touch sensor 54, so as to reduce or eliminate signal interference caused by the cluttered signal to the touch sensor 54, and improve accuracy of touch detection of the touch sensor 54. In addition, the antenna 6 radiates a high-frequency current, and the touch sensor 54 senses a low-frequency current. Therefore, the antenna 6 exerts no impact on touch detection of the touch sensor 54.

For example, a projection of the antenna 6 on the first circuit board 561 covers the touch sensor 54, to better provide a reference ground for the touch sensor 54, and improve detection accuracy of the touch sensor 54. It may be understood that a case in which the projection of the antenna 6 on the first circuit board 561 covers the touch sensor 54 includes a case of complete coverage and a case of basic coverage. When the projection of the antenna 6 covers more than 80% of the touch sensor 54, it is considered that there is the case of basic coverage. Specifically, coverage of the touch sensor 54 by the antenna 6 is mainly coverage of the touch sensor 54 by the radiation part of the antenna 6. At a position at which the touch sensor 54 may be interfered with by concentrated interference sources, the radiation part of the antenna 6 covers the touch sensor 54 as completely as possible.

In this embodiment, the antenna 6 is configured to transmit/receive a radio frequency signal, and the antenna 6 is further configured to provide a reference ground for the touch sensor 54. In this case, based on a relative position relationship between the main housing 11, the touch sensor 54, and the antenna 6, the antenna 6 in this embodiment of this application is compatible with two functions by using a same structure, and is not only used to implement wireless communication of the earphone 10, but also used as a reference ground of the touch sensor 54, to shield a cluttered signal and improve accuracy of touch detection.

In this embodiment, the touch sensor 54 and the antenna 6 of the earphone 10 coexist in a same space region, and occupied space is minimized, to facilitate miniaturization of the earphone 10. Furthermore, a radiation region of the antenna 6 and a touch control region of the touch sensor 54 may be implemented by using a same region of the main housing 11. When the main housing 11 has a fixed volume, both the radiation region of the antenna 6 and the touch control region of the touch sensor 54 may have a large area, so that the earphone 10 can obtain better transmit/receive performance of the antenna 6, and more diversified touch operations can be detected.

For example, the touch sensor 54 includes at least three touch blocks 541, and the at least three touch blocks 541 are arranged into a strip-shaped touch region and are disposed at an interval from each other. An extension direction of the strip-shaped touch region corresponds to an extension direction of the antenna 6. In this case, the touch sensor 54 is of a slider sensing structure. When capacitance of the at least three touch blocks 541 sequentially changes, it may be determined that the user performs a sliding action. The touch sensor 54 may further detect actions, for example, tap, double tap, touch and hold, and the like, of the user.

The at least three touch blocks 541 are disposed, to avoid incorrectly determining that a sliding action is generated when the user simultaneously touches two touch blocks 541. For example, a spacing between two adjacent touch blocks 541 may range from 0.5 mm to 2 mm. On the contrary, when the spacing between two adjacent touch blocks 541 is excessively small, an accidental touch is likely to occur. If the spacing between two adjacent touch blocks 541 is excessively large, the user possibly cannot touch the touch block 541, resulting in low touch efficiency.

When the touch sensor 54 includes a plurality of touch blocks 541, and the projection of the antenna 6 on the first circuit board 561 basically covers the touch sensor 54, more than 80% of an area of each touch block 541 should be covered.

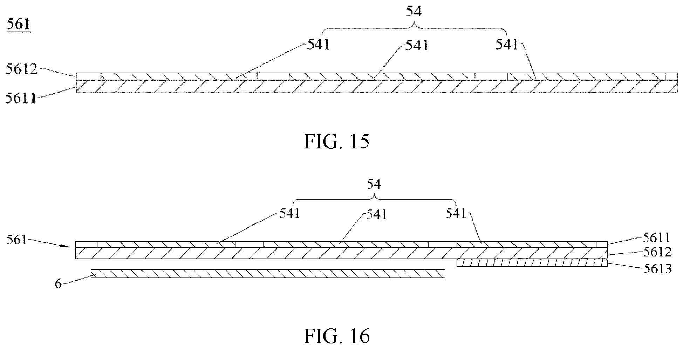

Refer to FIG. 15. FIG. 15 is a diagram of a partial structure of the first circuit board 561 shown in FIG. 13A.

In some embodiments, the first circuit board 561 includes an insulation layer 5611 and a conductive layer 5612 that are disposed in a stacked manner. The conductive layer 5612 is located on a side that is of the insulation layer 5611 and that faces the housing 1 (referring to FIG. 14), that is, on a side that faces away from the antenna 6. The conductive layer 5612 includes the touch sensor 54, and the conductive layer 5612 may include the at least three touch blocks 541. The insulation layer 5611 may be a polyimide (Polyimide, PI) layer, and the conductive layer 5612 may be a copper foil layer.

For example, the first circuit board 561 may be of a single-layer board structure, that is, there is one conductive layer on the first circuit board 561, so that there is a small thickness when the touch sensor 54 is formed. In some other embodiments, positions of the insulation layer 5611 and the conductive layer 5612 on the first circuit board 561 may be interchanged. In some other embodiments, the first circuit board 561 may include two insulation layers that are respectively located on two sides of the conductive layer 5612.

For example, as shown in FIG. 13A, the main circuit board 21 is located on a side that is of the antenna 6 and that faces away from the first circuit board 561, and the processor (which may be integrated into the main control chip 211) on the main circuit board 21 is electrically connected to the plurality of touch blocks 541 of the touch sensor 54. One end of the second circuit board 562 is connected to the first circuit board 561, and the other end is connected to the main circuit board 21. The plurality of touch blocks 541 may be electrically connected to the main circuit board 21 through the second circuit board 562. The processor may determine the touch operation of the user based on changes of capacitance values corresponding to the plurality of touch blocks 541. In some other embodiments, a detection circuit may be disposed on the main circuit board 21. The detection circuit is connected in series between the plurality of touch blocks 541 and the processor, and the detection circuit is configured to perform preliminary processing on electrical signals of the plurality of touch blocks 541, to reduce an operation amount of the processor.

The earphone 10 further includes a high-frequency blocking circuit 5621, and the high-frequency blocking circuit 5621 is connected in series between the plurality of touch blocks 541 and the processor. For example, the high-frequency blocking circuit 5621 may be fastened and electrically connected to the second circuit board 562. An inductive choke (choke) circuit is usually used for the high-frequency blocking circuit 5621. Each touch block 541 passes through the high-frequency blocking circuit 5621 and then is connected to the main circuit board 21. A low-frequency signal formed by the touch sensor 54 in a touch detection process may be transmitted to the processor through the high-frequency blocking circuit 5621. The antenna 6 of the earphone 10 usually works on a high-frequency Bluetooth frequency band. Therefore, the high-frequency blocking circuit 5621 can block a signal of the antenna 6 from forming a path on the plurality of touch blocks 541, to eliminate coupling impact of the plurality of touch blocks 541 on the antenna 6, so as to ensure that transmit/receive performance of the antenna 6 is not affected or is slightly affected.

Refer to FIG. 16. FIG. 16 is a diagram of structures of the first circuit board 561 and the antenna 6 shown in FIG. 13A in some other embodiments.

In some embodiments, when the antenna 6 does not include the second metal piece 63, or when an area of the radiation part of the antenna 6 is not large enough, the projection of the antenna 6 on the first circuit board 561 possibly cannot cover some touch blocks 541 of the touch sensor 54. In this case, a second conductive layer 5613 that corresponds to the some touch blocks 541 and that is used as a reference ground may be disposed on the first circuit board 561. In this case, the second conductive layer 5613 and the antenna 6 are approximately arranged in a staggered manner.

For example, the first circuit board 561 includes a conductive layer 5612, an insulation layer 5611, and the second conductive layer 5613 that are disposed in a stacked manner. The conductive layer 5612 is located on a side that is of the insulation layer 5611 and that faces the housing 1, the conductive layer 5612 includes the touch sensor 54, and the second conductive layer 5613 is located on a side that is of the insulation layer 5611 and that faces away from the housing 1. A projection of the antenna 6 on the first circuit board 561 covers one part of the touch sensor 54, and the second conductive layer 5613 covers the other part of the touch sensor 54. In this case, the second conductive layer 5613 can provide a reference ground for the touch sensor 54. In this embodiment, there is one second conductive layer 5613, and an area of the second conductive layer 5613 is significantly less than an area of the insulation layer 5611. An overall thickness of the first circuit board 561 is still very small, and mounting difficulty is low.

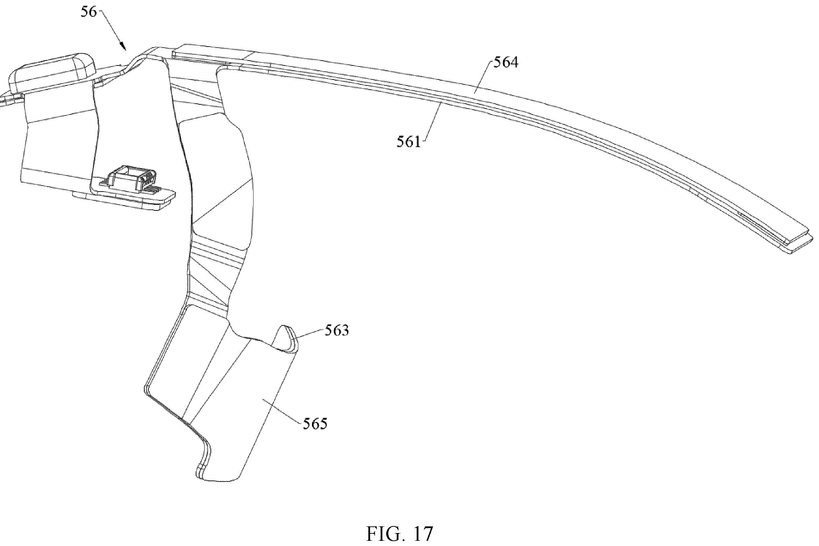

Refer to FIG. 14 and FIG. 17. FIG. 17 is a diagram of structures of the detection circuit board 56 and a related adhesive layer shown in FIG. 14.

In some embodiments, the first circuit board 561 of the detection circuit board 56 may be fixedly connected to the inner wall of the main housing 11 by using a hot melt adhesive membrane 564, the third circuit board 563 may be fixedly connected to the inner wall of the main housing 11 by using double-sided adhesive tape 565, and another part of the detection circuit board 56 may also be fixedly connected to the inner wall of the main housing 11 by using the double-sided adhesive tape. A region that is of the main housing 11 and that is used for the third circuit board 563 is located at a position close to the first opening 1131, an opening area of the first opening 1131 is large, and it is easy to implement adhesion, so that the third circuit board 563 can be easily and tightly bonded to the main housing 11 at a time by using the double-sided adhesive tape 565. The first circuit board 561 has a long length, and needs to extend from the top space 111a of the main housing 11 to the bottom space 111c of the main housing 11 during assembly. In a fastening manner of using the hot melt adhesive membrane 564, the first circuit board 561 may first extend into the main housing 11 in an assembly process. In this process, there is no incorrect adhesion. After the first circuit board 561 extends in place, the hot melt adhesive membrane 564 is heated (for example, heated to 80 degrees or 90 degrees), so that the first circuit board 561 is adhered to the main housing 11, and a gap between the first circuit board 561 and the main housing 11 can be better absorbed by using a semi-melted state of the hot melt adhesive membrane 564, to obtain a better bonding state between the first circuit board 561 and the main housing 11. In an assembly process of the earphone 10, the detection circuit board 56 may be first mounted in the main housing 11, then the main circuit board 21 is mounted, and then the detection circuit board 56 is snap-fitted with the main circuit board 21 to implement an electrical connection.

With reference to FIG. 3 and FIG. 6 again, the earphone 10 may further include a battery support 9, and the battery support 9 may be mounted in the bottom space 111c of the main housing 11. The battery support 9 fits with the main housing member 113, and is configured to fasten the battery 73, to improve assembly stability of the battery 73. The battery support 9 may be further configured to support and/or fasten the second flexible circuit board 23. The battery support 9 may be further configured to provide a support surface. The support surface faces the front side of the earphone 10, and the support surface and the main housing member 113 may jointly support and be connected to the sealing cover member 114, to improve connection stability and strength of the sealing cover member 114.

This application further provides an earphone assembly. The earphone assembly includes a charging case and an earphone. The charging case is configured to accommodate the earphone. The charging case may also be referred to as a charging compartment or an earphone case. The charging case includes a battery that can charge the earphone accommodated in the case, to meet a long-term use requirement of a user.

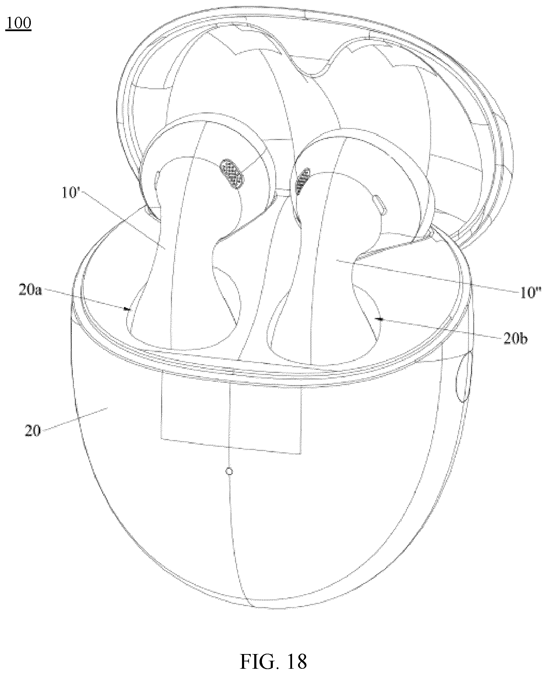

Refer to FIG. 18. FIG. 18 is a diagram of a structure of an earphone assembly 100 in some embodiments according to an embodiment of this application.

In some embodiments, the earphone assembly 100 includes a charging case 20, a first earphone 10', and a second earphone 10". The charging case 20 has a first earphone slot 20a and a second earphone slot 20b that are disposed at an interval. The first earphone slot 20a and the second earphone slot 20b are configured to accommodate the earphones. The first earphone 10' can be detachably accommodated in the first earphone slot 20a, and the second earphone 10" can be detachably accommodated in the second earphone slot 20b. In the first earphone 10' and the second earphone 10", one is a left earphone, and the other is a right earphone. In this embodiment, an example in which the first earphone 10' is the left earphone and the second earphone 10" is the right earphone is used for description. In some other embodiments, the first earphone 10' and the second earphone 10" may be interchanged. Both the first earphone 10' and the second earphone 10" use all or most of the structures of the earphone 10 in the foregoing embodiments.

A housing 1' of the first earphone 10' and a housing 1" of the second earphone 10" are of mutually symmetric structures, and the first earphone slot 20a and the second earphone slot 20b are of mutually symmetric structures. The housing 1' of the first earphone 10' is of an asymmetric structure, the first earphone slot 20a is of an asymmetric structure, and a shape of the first earphone slot 20a is the same as a shape of the housing 1' of the first earphone 10'. The housing 1" of the second earphone 10" is of an asymmetric structure, the second earphone slot 20b is of an asymmetric structure, and a shape of the second earphone slot 20b is the same as a shape of the housing 1" of the second earphone 10". Briefly, the first earphone slot 20a is adapted to the first earphone 10', and the second earphone slot 20b is adapted to the second earphone 10".

The foregoing embodiments are merely used to describe some technical solutions of this application, but are not intended to limit the technical solutions. Although this application is described in detail with reference to the foregoing embodiments, persons of ordinary skill in the art should understand that provided that no conflict occurs, they may still make modifications to the technical solutions described in the foregoing embodiments, make equivalent replacements to some technical features thereof, or combine the technical solutions described in different embodiments, without departing from the scope of the technical solutions of embodiments of this application.

## Claims

1. An earphone, comprising a housing, a first circuit board, and an antenna, wherein both the first circuit board and the antenna are located in the housing and are disposed in a stacked manner, the first circuit board and the antenna are structural members independent of each other, the first circuit board is located between the antenna and the housing, there is a touch sensor on a side that is of the first circuit board and that faces the housing, the touch sensor is configured to detect a touch action performed on the housing, and the antenna is configured to transmit/receive a radio frequency signal.

2. The earphone according to claim 1, wherein a projection of the antenna on the first circuit board covers the touch sensor.

3. The earphone according to claim 1 or 2, wherein the first circuit board comprises a conductive layer, and the conductive layer comprises the touch sensor.

4. The earphone according to any one of claims 1 to 3, wherein the touch sensor comprises at least three touch blocks, and the at least three touch blocks are arranged into a strip-shaped touch region and are disposed at an interval from each other.

5. The earphone according to claim 4, wherein a spacing between two adjacent touch blocks ranges from 0.5 mm to 2 mm.

6. The earphone according to any one of claims 1 to 5, wherein the earphone further comprises a main circuit board, a processor, and a radio frequency circuit, the main circuit board is located on a side that is of the antenna and that faces away from the first circuit board, both the processor and the radio frequency circuit are fastened and electrically connected to the main circuit board, the radio frequency circuit is electrically connected to the antenna and the processor, and the processor is electrically connected to a plurality of touch blocks.

7. The earphone according to claim 6, wherein the earphone further comprises a high-frequency blocking circuit, and the high-frequency blocking circuit is connected in series between the plurality of touch blocks and the processor.

8. The earphone according to claim 7, wherein the earphone further comprises a second circuit board, one end of the second circuit board is connected to the first circuit board, the other end of the second circuit board is connected to the main circuit board, and the high-frequency blocking circuit is fastened and electrically connected to the second circuit board.

9. The earphone according to claim 6, wherein the antenna comprises an antenna support and a first metal piece, the antenna support is located between the first circuit board and the main circuit board, the first metal piece is fastened to the antenna support, and the first metal piece is electrically connected to the main circuit board.

10. The earphone according to claim 6, wherein the antenna comprises an antenna support, a first metal piece, and a second metal piece, the antenna support is located between the first circuit board and the main circuit board, the first metal piece is fastened to the antenna support, the first metal piece is electrically connected to the main circuit board, and the second metal piece is fastened and electrically connected to the first metal piece.

11. The earphone according to claim 9 or 10, wherein the first metal piece is formed on the antenna support by using a laser direct structuring process.

12. The earphone according to any one of claims 9 to 11, wherein the antenna support comprises a plate body and a plurality of support feet fastened to the plate body, the plate body and the main circuit board are disposed at an interval, and the plurality of support feet are fastened to the main circuit board, and
the first metal piece comprises a main body part and a connection part, the main body part is fastened on a side that is of the plate body and that faces away from the main circuit board, the connection part is connected to the main body part, and extends to at least one of the plurality of support feet, and the connection part is soldered to the main circuit board.

13. The earphone according to claim 12, wherein there are a plurality of connection parts, and the plurality of connection parts are connected to different positions of the main body part and are fastened to different support feet.

14. The earphone according to claim 10, wherein the antenna comprises an extended circuit board, and the extended circuit board comprises the second metal piece.

15. The earphone according to claim 1, wherein the first circuit board comprises a conductive layer, an insulation layer, and a second conductive layer that are disposed in a stacked manner, the conductive layer is located on a side that is of the insulation layer and that faces the housing, the conductive layer comprises the touch sensor, and the second conductive layer is located on a side that is of the insulation layer and that faces away from the housing; and
a projection of the antenna on the first circuit board covers one part of the touch sensor, and the second conductive layer covers the other part of the touch sensor.

16. The earphone according to any one of claims 1 to 15, wherein the housing comprises a main housing and a front housing, the front housing is fastened on a front side of the main housing, internal space of the front housing communicates with internal space of the main housing, and when the earphone is being worn, the front housing faces a user ear;
the main housing comprises a first end connected to the front housing and a second end that is far away from the front housing, and in a direction from the first end to the second end of the main housing, an outer contour of the main housing first shrinks and then expands; and
the first circuit board is fastened to an inner wall of the main housing, and when the earphone is being worn, the first circuit board faces away from the user ear.

17. The earphone according to claim 16, wherein the internal space of the main housing comprises top space, neck space, and bottom space, a cross-sectional area of the top space of the main housing is greater than a cross-sectional area of the neck space of the main housing, and a cross-sectional area of the bottom space of the main housing is greater than the cross-sectional area of the neck space of the main housing; and
the first circuit board extends from the top space of the main housing to the bottom space of the main housing.

18. The earphone according to claim 16 or 17, wherein the earphone further comprises a third circuit board, the third circuit board is located in the top space of the main housing, one end of the third circuit board is connected to the first circuit board or the second circuit board, the other end of the third circuit board is bent to the side that is of the antenna and that faces away from the first circuit board, and is fastened to the main housing, and there is a wearing detection sensor on a side that is of the third circuit board and that faces the main housing.

19. The earphone according to claim 18, wherein the third circuit board and the first circuit board are integrally formed structural members.

20. An earphone assembly, comprising a charging case and the earphone according to any one of claims 1 to 19, wherein the charging case is configured to accommodate the earphone.
